# EUROPEAN PATENT APPLICATION

(11) **EP 4 436 246 A1**
(43) Date of publication of application: **25.09.2024**
(21) Application number: 22911847.6
(22) Date of filing: 20.12.2022
(51) Int. Cl.: H04W 28/02, H04W 76/14, H04W 88/04

(54) **METHOD AND DEVICE FOR SUPPORTING QOS CONFIGURATION CONTROL FOR SIDELINK IN WIRELESS COMMUNICATION SYSTEM**

(30) Priority: 21.12.2021 KR 20210183957
(71) Applicant: Samsung Electronics Co., Ltd., Suwon-si, Gyeonggi-do 16677 (KR)
(72) Inventor: KANG, Hyunjeong, Suwon-si, Gyeonggi-do 16677 (KR); AGIWAL, Anil, Suwon-si, Gyeonggi-do 16677 (KR)
(74) Representative: Gulde & Partner
(86) International application number: PCT/KR2022/020822
(87) International publication number: WO 2023/121214

(57) **Abstract**

The present disclosure relates to a 5G or 6G communication system for supporting a higher data transmission rate. In addition, the present disclosure provides a method performed by a relay terminal in a wireless communication system, comprising the steps of: receiving, from a first terminal, an assistance message including first quality of service (QoS) information for a data service between the first terminal and a second terminal; acquiring second QoS information related to the relay terminal and the first terminal on the basis of the first QoS information; transmitting the second QoS information to the first terminal; acquiring first sidelink radio bearer configuration information on the basis of the second QoS information; transmitting, to the first terminal, a radio resource control (RRC) reconfiguration sidelink message including the first sidelink radio bearer configuration information; and receiving an RRC reconfiguration complete sidelink message from the first terminal.

## Description

### [Technical Field]

The disclosure relates to a wireless communication system. The disclosure relates to a method and device for supporting quality of service (QoS) configuration control for a sidelink in a wireless communication system. Further, the disclosure relates to a method and device for controlling a QoS for a communication service of a terminal connected to a network through a relay terminal based on a sidelink in a wireless communication system.

### [Background Art]

5G mobile communication technology defines a wide frequency band to enable a fast transmission speed and new services, and may be implemented not only in a frequency ('sub 6 GHz') band of 6 GHz or less such as 3.5 GHz, but also in an ultra high frequency band ('above 6 GHz') called a mmWave such as 28 GHz and 39 GHz. Further, in the case of 6G mobile communication technology, which is referred to as a beyond 5G system, in order to achieve a transmission speed that is 50 times faster than that of 5G mobile communication technology and ultra-low latency reduced to 1/10 compared to that of 5G mobile communication technology, implementations in terahertz bands (e.g., such as 95 GHz to 3 terahertz (3 THz) band) are being considered.

In the early days of 5G mobile communication technology, with the goal of satisfying the service support and performance requirements for an enhanced mobile broadband (eMBB), ultra-reliable low-latency communications (URLLC), and massive machine-type communications (mMTC), standardization has been carried out for beamforming and massive multi-input multi-output (MIMO) for mitigating a path loss of radio waves in an ultra-high frequency band and increasing a propagation distance of radio waves, support for various numerologies (multiple subcarrier spacing operation, and the like) for efficient use of ultra-high frequency resources and dynamic operation for slot formats, initial access technology for supporting multi-beam transmission and broadband, a definition and operation of a band-width part (BWP), a new channel coding method such as a low density parity check (LDPC) code for large capacity data transmission and a polar code for high reliable transmission of control information, L2 pre-processing, and network slicing that provides a dedicated network specialized for specific services.

Currently, discussions are ongoing to improve initial 5G mobile communication technology and enhance a performance thereof in consideration of services in which 5G mobile communication technology was intended to support, and physical layer standardization for technologies such as vehicle-to-everything (V2X) for assisting driving determination of an autonomous vehicle and increasing user convenience based on a location and state information of the vehicle transmitted by the vehicle, new radio unlicensed (NR-U) for the purpose of a system operation that meets various regulatory requirements in unlicensed bands, NR UE power saving, a non-terrestrial network (NTN), which is direct UE-satellite communication for securing coverage in regions where communication with a terrestrial network is impossible, and positioning is in progress.

Further, standardization in the field of air interface architecture/protocol for technologies such as industrial Internet of things (IIoT) for supporting new services through linkage and convergence with other industries, integrated access and backhaul (IAB) that provides nodes for expanding network service regions by integrating wireless backhaul links and access links, mobility enhancement including conditional handover and dual active protocol stack (DAPS) handover, and 2-step RACH for NR that simplifies a random access procedure is also in progress, and standardization in the field of system architecture/service for 5G baseline architecture (e.g., service based architecture, service based interface) for applying network functions virtualization (NFV) and software-defined networking (SDN) technologies, mobile edge computing (MEC) that receives services based on a location of a UE, and the like is also in progress.

When such a 5G mobile communication system is commercialized, connected devices in an explosive increase trend will be connected to communication networks; thus, it is expected that function and performance enhancement of a 5G mobile communication system and integrated operation of connected devices will be required. To this end, new research on extended reality (XR) for efficiently supporting augmented reality (AR), virtual reality (VR), mixed reality (MR), and the like, 5G performance improvement and complexity reduction using artificial intelligence (AI) and machine learning (ML), AI service support, metaverse service support, and drone communication will be conducted.

Further, the development of such a 5G mobile communication system will be the basis for the development of full duplex technology for improving frequency efficiency and system network of 6G mobile communication technology, satellite, Al-based communication technology that utilizes artificial intelligence (AI) from a design stage and that realizes system optimization by internalizing end-to-end AI support functions, and next generation distributed computing technology that realizes complex services beyond the limits of UE computing capabilities by utilizing ultra-high-performance communication and computing resources as well as a new waveform for ensuring coverage in a terahertz band of 6G mobile communication technology, full dimensional MIMO (FD-MIMO), multi-antenna transmission technologies such as an array antenna and large scale antenna, metamaterial-based lenses and antennas for improving coverage of terahertz band signals, high-dimensional spatial multiplexing technology using orbital angular momentum (OAM), and reconfigurable intelligent surface (RIS) technology.

Further, direct communication between terminals (sidelink communication) using a 5G communication system is being studied, and direct communication between terminals is applied to, for example, vehicle-to-everything (hereinafter, V2X) and a public safety network; thus, it is expected that direct communication between terminals will be able to provide various services to users.

In particular, a method of utilizing sidelink relays that may support expansion of service coverage, increased reliability of data transmission, and reduced power consumption of terminals is required.

### [Disclosure]

### [Technical Problem]

The problem to be solved by the disclosure is to provide a method and device for supporting quality of service (QoS) configuration control for a sidelink in a wireless communication system.

Further, the problem to be solved by the disclosure is to provide a method and device for managing configuration information for controlling a quality of service (QoS) for a data service of a terminal in the case of a UE-to-NW relay in which the terminal is connected to a network through a sidelink relay to perform data transmission and reception or in the case of a UE-to-UE relay in which the terminal transmits and receives data to and from another terminal through a sidelink relay in a wireless communication system.

Technical problems to be achieved in the disclosure are not limited to the above-described technical problems, and other technical problems not described will be clearly understood by those of ordinary skill in the art to which the disclosure belongs from the description below.

### [Technical Solution]

According to an embodiment of the disclosure, a method of configuring QoS control for a data service of a terminal in a wireless communication system in the case that the terminal is connected to a network through a connection to a sidelink relay to perform data transmission and reception and in the case that the terminal transmits and receives data to and from another terminal through a connection to a sidelink relay may include acquiring, by the sidelink relay, sidelink radio bearer configuration information corresponding to an end-to-end QoS for a data service of the terminal; transmitting, by the sidelink relay, sidelink radio bearer configuration information corresponding to the end-to-end QoS to the terminal; and applying, by the terminal, a sidelink radio bearer configuration corresponding to the end-to-end QoS acquired from the sidelink relay.

Further, according to an embodiment of the disclosure, a method performed by a relay terminal in a wireless communication system may include receiving, from a first terminal, an assistance message including first quality of service (QoS) information for a data service between the first terminal and a second terminal; acquiring second QoS information related to the relay terminal and the first terminal based on the first QoS information; transmitting the second QoS information to the first terminal; acquiring first sidelink radio bearer configuration information based on the second QoS information; transmitting, to the first terminal, a radio resource control (RRC) reconfiguration sidelink message including the first sidelink radio bearer configuration information; and receiving an RRC reconfiguration complete sidelink message from the first terminal.

Further, according to an embodiment of the disclosure, a method performed by a first terminal in a wireless communication system may include acquiring first quality of service (QoS) information for a data service between the first terminal and a second terminal; transmitting, to a relay terminal, an assistance message including the first QoS information; receiving, from the relay terminal, second QoS information acquired based on the first QoS information; acquiring second sidelink radio bearer configuration information based on the second QoS information; receiving, from the relay terminal, a radio resource control (RRC) reconfiguration sidelink message including first sidelink radio bearer configuration information acquired based on the second QoS information; and transmitting an RRC reconfiguration complete sidelink message to the relay terminal.

Further, according to an embodiment of the disclosure, a relay terminal of a wireless communication system may include a transceiver; and a controller, wherein the controller may be configured to control to receive, from a first terminal, an assistance message including first quality of service (QoS) information for a data service between the first terminal and a second terminal, to acquire second QoS information related to the relay terminal and the first terminal based on the first QoS information, to transmit the second QoS information to the first terminal, to acquire first sidelink radio bearer configuration information based on the second QoS information, to transmit, to the first terminal, a radio resource control (RRC) reconfiguration sidelink message including the first sidelink radio bearer configuration information, and to receive, from the first terminal, an RRC reconfiguration complete sidelink message.

Further, according to an embodiment of the disclosure, a first terminal of a wireless communication system may include a transceiver; and a controller, wherein the controller may be configured to control to acquire first quality of service (QoS) information for a data service between the first terminal and a second terminal, to transmit, to the relay terminal, an assistance message including the first QoS information, to receive second QoS information acquired based on the first QoS information from the relay terminal, to acquire second sidelink radio bearer configuration information based on the second QoS information, to receive, from the relay terminal, a radio resource control (RRC) reconfiguration sidelink message including first sidelink radio bearer configuration information acquired based on the second QoS information, and to transmit the RRC reconfiguration complete sidelink message to the relay terminal.

### [Advantageous Effects]

According to an embodiment of the disclosure, a method and device for supporting QoS configuration control for a sidelink in a wireless communication system can be provided.

Further, according to an embodiment of the disclosure, a device and method capable of effectively providing a service and expanding service coverage in a wireless communication system can be provided.

Effects that may be obtained from the disclosure are not limited to the above-described effects, and other effects not described will be clearly understood by those of ordinary skill in the art to which the disclosure belongs from the description below.

### [Description of Drawings]

FIG. 1A is a diagram illustrating a wireless communication system according to an embodiment of the disclosure.
FIG. 1B is a diagram illustrating a wireless communication system according to an embodiment of the disclosure.
FIG. 2 is a block diagram illustrating a constitution of a base station in a wireless communication system according to an embodiment of the disclosure.
FIG. 3 is a block diagram illustrating a constitution of a terminal in a wireless communication system according to an embodiment of the disclosure.
FIG. 4 is a block diagram illustrating a constitution of a communication unit in a wireless communication system according to an embodiment of the disclosure.
FIG. 5 is a diagram illustrating a structure of time-frequency resources of a wireless communication system according to an embodiment of the disclosure.
FIG. 6 is a block diagram illustrating a layer-3 UE-to-NW relay protocol stack according to an embodiment of the disclosure.
FIG. 7A is a block diagram illustrating a layer-3 UE-to-UE relay user plane protocol stack according to an embodiment of the disclosure.
FIG. 7B is a block diagram illustrating a layer-3 UE-to-UE relay control plane protocol stack according to an embodiment of the disclosure.
FIG. 7C is a block diagram illustrating a layer-2 UE-to-UE relay user plane protocol stack according to an embodiment of the disclosure.
FIG. 7D is a block diagram illustrating a layer-2 UE-to-UE relay control plane protocol stack according to an embodiment of the disclosure.
FIG. 8A is a block diagram illustrating QoS mapping of a UE-to-NW relay according to an embodiment of the disclosure.
FIG. 8B is a block diagram illustrating QoS mapping of a UE-to-UE relay according to an embodiment of the disclosure.
FIG. 9 is a diagram illustrating signal flow between a remote terminal and a relay terminal that process sidelink radio bearer configuration information corresponding to a QoS of the remote terminal in a layer-3 UE-to-NW relay according to an embodiment of the disclosure.
FIG. 10A is a signal flow diagram illustrating an operation of a remote terminal and a relay terminal that process sidelink radio bearer configuration information corresponding to a QoS of the remote terminal in a layer-3 UE-to-NW relay according to an embodiment of the disclosure.
FIG. 10B is a signal flow diagram illustrating an operation of a remote terminal and a relay terminal that process sidelink radio bearer configuration information corresponding to a QoS of the remote terminal in a layer-3 UE-to-NW relay according to another embodiment of the disclosure.
FIG. 10C is a signal flow diagram illustrating an operation of a remote terminal and a relay terminal that process sidelink radio bearer configuration information corresponding to a QoS of the remote terminal in a layer-3 UE-to-NW relay according to another embodiment of the disclosure.
FIG. 11A is a signal flow diagram illustrating an operation of a relay terminal that processes sidelink radio bearer configuration information corresponding to a QoS of a remote terminal in a UE-to-UE relay according to an embodiment of the disclosure.
FIG. 11B is a signal flow diagram illustrating an operation of a relay terminal that processes sidelink radio bearer configuration information corresponding to a QoS of a remote terminal in a UE-to-UE relay according to another embodiment of the disclosure.
FIG. 11C is a signal flow diagram illustrating an operation of a relay terminal that processes sidelink radio bearer configuration information corresponding to a QoS of a remote terminal in a UE-to-UE relay according to another embodiment of the disclosure.
FIG. 12 is a signal flow diagram illustrating an operation of a transmitting remote terminal that processes sidelink radio bearer configuration information corresponding to a QoS of the remote terminal in an UE-to-UE relay according to an embodiment of the disclosure.
FIG. 13 is a signal flow diagram illustrating an operation of a remote terminal that processes sidelink radio bearer configuration information corresponding to a QoS of the remote terminal in a UE-to-UE relay according to an embodiment of the disclosure.

### [Mode for Disclosure]

Hereinafter, preferred embodiments of the disclosure will be described in detail with reference to the attached drawings. In this case, it should be noted that in the attached drawings, identical components are indicated by identical symbols whenever possible. Further, detailed descriptions of well-known functions and constitutions that may obscure the gist of the disclosure will be omitted.

In describing embodiments in this specification, descriptions of technical contents that are well known in the technical field to which the disclosure pertains and that are not directly related to the disclosure will be omitted. This is to more clearly convey the gist of the disclosure without obscuring the gist of the disclosure by omitting unnecessary description.

For the same reason, some components are exaggerated, omitted, or schematically illustrated in the accompanying drawings. Further, the size of each component does not fully reflect the actual size. In each drawing, the same reference numerals are given to the same or corresponding components.

Advantages and features of the disclosure, and a method of achieving them will become apparent with reference to the embodiments described below in detail in conjunction with the accompanying drawings. However, the disclosure is not limited to the embodiments disclosed below, but may be implemented in various different forms, and only these embodiments enable the disclosure to be complete, and are provided to fully inform the scope of the disclosure to those of ordinary skill in the art to which the disclosure pertains, and the disclosure is only defined by the scope of the claims. Like reference numerals refer to like components throughout the specification.

In this case, it will be understood that each block of message flow diagrams and combinations of the message flow diagrams may be performed by computer program instructions. Because these computer program instructions may be mounted in a processor of a general purpose computer, special purpose computer, or other programmable data processing equipment, the instructions performed by a processor of a computer or other programmable data processing equipment generate a means that performs functions described in the message flow diagram block(s). Because these computer program instructions may be stored in a computer usable or computer readable memory that may direct a computer or other programmable data processing equipment in order to implement a function in a particular manner, the instructions stored in the computer usable or computer readable memory may produce a production article containing instruction means for performing the function described in the message flow diagram block(s). Because the computer program instructions may be mounted on a computer or other programmable data processing equipment, a series of operation steps are performed on the computer or other programmable data processing equipment to generate a computer-executed process; thus, instructions for performing the computer or other programmable data processing equipment may provide steps for performing functions described in the message flow diagram block(s).

Further, each block may represent a portion of a module, a segment, or a code including one or more executable instructions for executing specified logical function(s). Further, it should be noted that in some alternative implementations, functions recited in the blocks may occur out of order. For example, two blocks illustrated one after another may in fact be performed substantially simultaneously, or the blocks may be sometimes performed in the reverse order according to the corresponding function.

In this case, the term '-unit' used in this embodiment means software or hardware components such as field programmable gate array (FPGA) or application specific integrated circuit (ASIC), and '- unit' performs certain roles. However, '-unit' is not limited to software or hardware. '-unit' may be constituted to reside in an addressable storage medium or may be constituted to reproduce one or more processors. Therefore, as an example, '-unit' includes components such as software components, object-oriented software components, class components, and task components, processes, functions, properties, procedures, subroutines, segments of program code, drivers, firmware, microcode, circuit, data, databases, data structures, tables, arrays, and variables. Functions provided in the components and '-units' may be combined into a smaller number of components and '-units' or may be further separated into additional components and '-units'. Further, components and '-units' may be implemented to reproduce one or more CPUs in a device or secure multimedia card.

In describing embodiments of the disclosure in detail, a wireless access network new RAN (NR) on 5G mobile communication standards specified by a 3rd generation partnership project (3GPP), which is a mobile communication standards standardization organization, and a packet core (5G system, 5G core network, or next generation core (NG core)), which is a core network are a main target, but the main gist of the disclosure may be applied to other communication systems with similar technical backgrounds with slight modifications without significantly departing from the scope of the disclosure, and this will be possible at the discretion of a person with skilled technical knowledge in the technical field of the disclosure.

In the 5G system, in order to support network automation, a network data collection and analysis function (NWDAF), which is a network function that provides a function of analyzing and providing data collected from the 5G network, may be defined. The NWDAF may collect/store/analyze information from the 5G network and provide the results to an unspecified network function (NF), and the analysis results may be used independently by each NF.

Hereinafter, for convenience of description, some terms and names defined in the 3GPP standard (standard for 5G, NR, LTE, or similar systems) may be used. However, they are not limited by the terms and names of the disclosure, and may be equally applied to systems that comply with other standards.

Hereinafter, the disclosure relates to a method and device for controlling a sidelink radio bearer configuration corresponding to an end-to-end QoS of a terminal in the case that the terminal is connected to a network through a sidelink relay to perform data transmission and reception or in the case that the terminal transmits and receives data to and from another terminal through a sidelink relay in a wireless communication system. The disclosure provides a method and device in which a sidelink relay acquires sidelink radio bearer configuration information corresponding to an end-to-end QoS of a terminal and provides sidelink radio bearer configuration information corresponding to the end-to-end QoS to the terminal in a wireless communication system.

Specifically, the disclosure provides a method in which a sidelink relay acquires sidelink radio bearer configuration information corresponding to end-to-end QoS information of the terminal from a base station or preconfigured information and provides the acquired sidelink radio bearer configuration information to the terminal, and in which the terminal may transmit and receive data to and from the network through the sidelink relay based on sidelink radio bearer configuration information corresponding to the end-to-end QoS information of the terminal acquired from the sidelink relay or may transmit and receive data to and from another terminal through the sidelink relay. According to embodiments of the disclosure, the terminal may expand service coverage through a sidelink relay terminal, increase reliability of data transmission and reception, and minimize battery usage thereof.

A term indicating a signal, a term indicating a channel, a term indicating control information, a term indicating a network entity, and a term indicating a component of a device, which are used in the following description are exemplified for convenience of description. Accordingly, the terms are not limited to the terms used in the disclosure, and other terms indicating a target having equivalent technical meanings may be used.

Hereinafter, a base station is a subject performing resource allocation of a terminal, and may be at least one of a gNode B, an eNode B, a node B, a base station (BS), a radio access unit, a base station controller, or a node on a network. The terminal may include a user equipment (UE), a mobile station (MS), a cellular phone, a smart phone, a computer, or a multimedia system capable of performing a communication function. However, this is only an example, and the base station and terminal are not limited to this example. In the disclosure, an eNB may be used interchangeably with a gNB for convenience of description. That is, a base station described as an eNB may represent a gNB. In the disclosure, the term 'terminal' may represent various wireless communication devices as well as mobile phones, NB-IoT devices, and sensors.

In the following description, a physical channel and a signal may be used interchangeably with data or a control signal. For example, although a physical downlink shared channel (PDSCH) is a term referring to a physical channel through which data is transmitted, the PDSCH may be used for referring to data. That is, in the disclosure, the expression 'transmit a physical channel' may be interpreted equivalently to the expression 'transmit data or a signal through a physical channel'.

Hereinafter, in the disclosure, higher layer signaling refers to a signal transmission method in which a signal is transmitted from a base station to a terminal using a downlink data channel of a physical layer, or from a terminal to a base station using an uplink data channel of a physical layer. Higher layer signaling may be understood as radio resource control (RRC) signaling or media access control (MAC) control element (CE).

In the disclosure, in order to determine whether a particular condition is satisfied or fulfilled, the expression of more than a specific number or less than a specific number has been used, but this is only a description for representing an example and does not exclude the description of a specific number or more or a specific number or less. A condition described as 'a specific number or more' may be replaced by `more than a specific number', a condition described as 'a specific number or less' may be replaced by 'less than a specific number', and a condition described as 'a specific number or more and less than a specific number' may be replaced by `more than a specific number and a specific number or less'.

Further, the disclosure describes embodiments using terms used in some communication standards (e.g., 3rd generation partnership project (3GPP)), but this is only an example for description. Embodiments of the disclosure may be easily modified and applied to other communication systems.

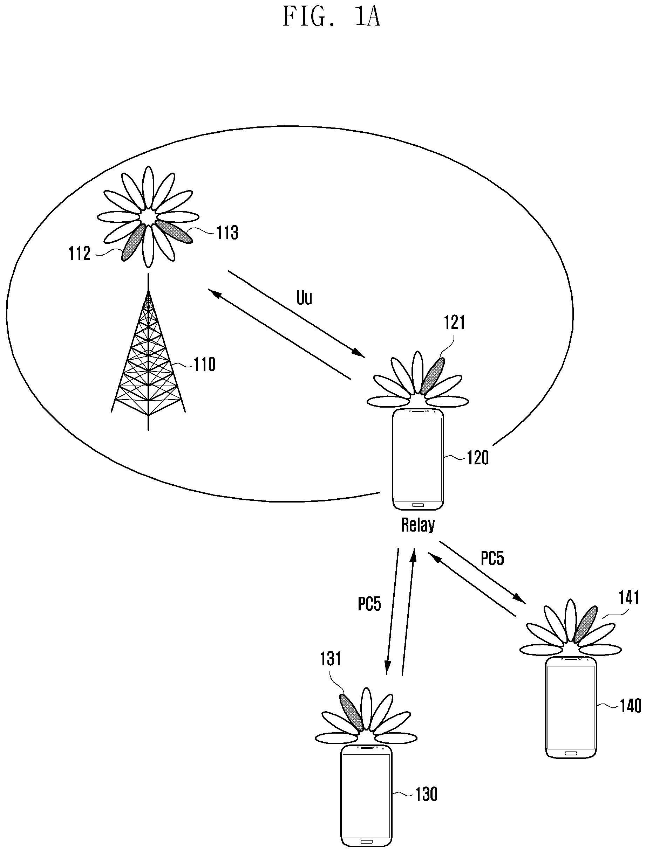

FIG. 1A is a diagram illustrating a wireless communication system according to an embodiment of the disclosure.

FIG. 1A is a part of nodes that use a wireless channel in a wireless communication system and illustrates a base station 110, terminals 130 and 140, and a sidelink relay 120 that may relay data transmission and reception between the base station and the terminal. Here, the sidelink relay corresponds to a UE to network (U2N) relay. FIG. 1A illustrates only one base station, but other base stations identical or similar to the base station 110 may be further included.

The base station 110 is a network infrastructure that provides wireless access to the terminals 130 and 140 and the relay 120. The base station 110 has coverage defined as a predetermined geographic area based on a distance that may transmit signals. In addition to the base station, the base station 110 may be referred to as an 'access point (AP)', 'eNodeB (eNB)', '5th generation node (5G node)', 'next generation nodeB (gNB)', 'wireless point', 'transmission/reception point (TRP)', or other terms with an equivalent technical meaning.

The relay 120 is a device used by a user or a network infrastructure and may communicate with the base station 110 through a wireless channel. A link from the base station 110 toward the relay 120 may be referred to as a downlink (DL), and a link from the relay 120 toward the base station 110 may be referred to as an uplink (UL). The base station 110 and the relay 120 may be connected through a Uu interface. The uplink means a wireless link through which the relay 120 transmits data or control signals to the base station 110, and the downlink means a wireless link through which the base station 110 transmits data or control signals to the relay 120.

The relay 120 may communicate with the terminal 130 and the terminal 140 through a wireless channel. In this case, a link between the relay 120 and the terminal 130 and a link between the relay 120 and the terminal 140 are referred to as a sidelink, and the sidelink may be referred to as a PC5 interface.

Each of the terminals 130 and 140 is a device used by a user and may communicate with the base station 110 through a wireless channel or communicate with the network through the relay 120 and a wireless channel. In the disclosure, only the case that each of the terminal 130 and the terminal 140 performs communication with the relay 120 through a wireless channel is illustrated. At least one of the terminal 130 or the terminal 140 may be operated without user involvement. That is, at least one of the terminal 130 or the terminal 140 is a device that performs machine type communication (MTC) and may not be carried by the user. The terminal 130 and the terminal 140 each may be referred to as a 'user equipment (UE)', a 'mobile station', a 'subscriber station', a 'remote terminal', a 'wireless terminal', a 'user device', or other terms with an equivalent technical meaning in addition to the terminal.

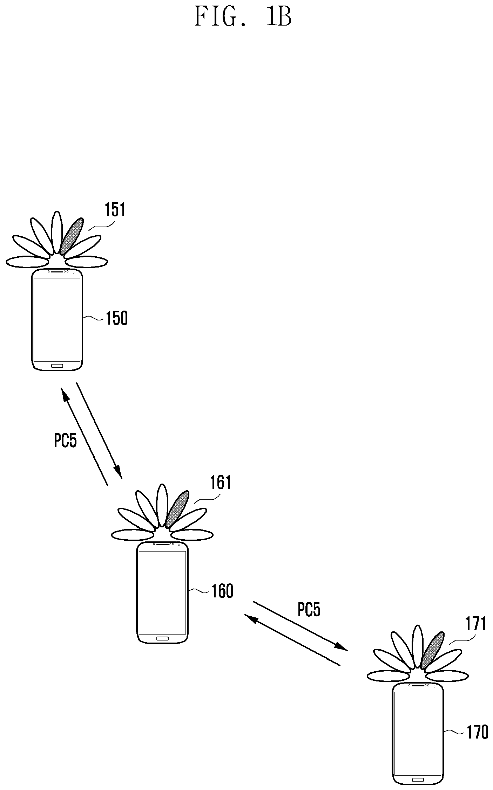

FIG. 1B is a diagram illustrating a wireless communication system according to an embodiment of the disclosure.

FIG. 1B is a part of nodes that use a wireless channel in a wireless communication system, and illustrates a wireless communication system including terminals 150 and 170 and a sidelink relay 160 that may relay data transmission and reception between terminals. Here, the sidelink relay 160 corresponds to a UE to UE (U2U) relay.

The relay 160 may communicate with the terminal 150 and the terminal 170 through a wireless channel. In this case, a link between the relay 160 and the terminal 150 and a link between the relay 160 and the terminal 170 are referred to as a sidelink, and the sidelink may be referred to as a PC5 interface.

Each of the terminal 150 and the terminal 170 is a device used by a user and may communicate directly through a wireless channel or communicate with the other terminal through the relay 160 and a wireless channel. In this case, a link between the terminal 150 and the terminal 170, a link between the terminal 150 and the relay 160, and a link between the terminal 170 and the relay 160 are referred to as a side link, and the side link may also be referred to a PC5 interface.

At least one of the terminal 150 or the terminal 170 may be operated without user involvement. That is, at least one of the terminal 150 or the terminal 170 is a device that performs machine-type communication and may not be carried by the user. The terminal 150 and the terminal 170 each may be referred to a 'user equipment (UE)', 'mobile station', 'subscriber station', 'remote terminal', 'wireless terminal', 'user device', or other terms with an equivalent technical meaning in addition to the terminal.

In the following description, an uplink or downlink and Uu interface, sidelink, and PC-5 may be used interchangeably.

The base station 110, the relays 120, 160, and the terminals 130, 140, 150, and 170 illustrated in FIGS. 1A to 1B may transmit and receive wireless signals in a mmWave band (e.g., 28 GHz, 30 GHz, 38 GHz, 60 GHz). In this case, to improve a channel gain, the base station 110, the relays 120 and 160, and the terminals 130, 140, 150, and 170 may perform beamforming. Here, beamforming may include transmission beamforming and reception beamforming. That is, the base station 110, the relays 120 and 160, and the terminals 130, 140, 150, and 170 may provide directivity to a transmitted signal or a received signal. To this end, the base station 110, the relays 120 and 160, and the terminals 130, 140, 150, and 170 may select serving beams 112, 113, 121, 131, 141, 151, 161, and 171 through a beam search or beam management procedure. After the serving beams 112, 113, 121, 131, 141, 151, 161, and 171 are selected, communication may be performed through resources in a quasi co-located (QCL) relationship with a resource that has transmitted the serving beams 112, 113, 121, 131, 141, 151, 161, and 171.

When large-scale characteristics of a channel that has transmitted symbols on a first antenna port may be inferred from a channel that has transmitted symbols on a second antenna port, the first antenna port and the second antenna port may be evaluated to be in a QCL relationship. For example, large-scale characteristics may include at least one of delay spread, Doppler spread, Doppler shift, average gain, average delay, or spatial receiver parameters.

The terminal 130, the terminal 140, the terminal 150, and the terminal 170 illustrated in FIGS. 1A and 1B may support vehicle communication. In the case of vehicle communication, in the LTE system, a standardization work on vehicle to everything (V2X) technology based on a device-to-device communication (D2D) structure was completed in 3GPP Release 14 and Release 15, and a standardization work on V2X technology based on 5G NR was completed in 3GPP Release 16. NR V2X supports unicast communication, groupcast (or multicast) communication, and broadcast communication between terminals. Further, unlike LTE V2X, which aims to transmit and receive basic safety information necessary for a vehicle driving on the road, NR V2X aims to provide more advanced services such as platooning, advanced driving, an extended sensor, remote driving, and the like. A V2X service may be divided into a basic safety service and an advanced service. The basic safety service may include detailed services from a vehicle notification (cooperative awareness messages (CAM) or basic safety message (BSM)) service to a left turn notification service, a front car collision warning service, an emergency vehicle approach notification service, a front obstacle warning service, and an intersection signal information service, and V2X information may be transmitted and received using broadcast, unicast, or group cast transmission methods. The advanced service not only has stronger quality of service (QoS) requirements than the basic safety service, but also requires a method capable of transmitting and receiving V2X information using unicast and groupcast transmission methods in addition to broadcast in order to transmit and receive V2X information within a specific vehicle group or to transmit and receive V2X information between two vehicles. The advanced service may include detailed services such as a platooning service, autonomous driving service, remote driving service, and extended sensor-based V2X service. Further, NR V2X may support a direct communication service between terminals in a region without a network infrastructure to provide a public safety service.

Hereinafter, a sidelink (SL) refers to a transmission and reception path for signals between terminals, or a transmission and reception path for signals between a terminal and a relay, and may be used interchangeably with a PC5 interface. Hereinafter, a base station is a subject that performs resource allocation of a terminal and a relay, and may be a base station that supports both V2X communication and general cellular communication or a base station that supports only V2X communication. That is, the base station may mean an NR base station (e.g., gNB), an LTE base station (e.g., eNB), or a road site unit (RSU). The terminal may include a vehicle that supports vehicular-to-vehicular (V2V) communication, a vehicle that supports vehicular-to-pedestrian (V2P), a pedestrian's handset (e.g., smartphone), a vehicle that supports vehicular-to-network (V2N) or a vehicle that supports vehicular-to-infrastructure (V2I) and an RSU equipped with a terminal function, an RSU equipped with a base station function, or an RSU equipped with part of the base station function and part of the terminal function as well as a general user equipment and a mobile station.

In the disclosure, the terminal may mean a vehicle that supports vehicular-to-vehicular (V2V), a vehicle that supports vehicular-to-pedestrian (V2P), a pedestrian's handset (e.g., smartphone), a vehicle that supports vehicular-to-network (V2N), or a vehicle that supports vehicular-to-infrastructure (V2I). The terminal may mean a user device that supports communication between devices in the public safety network.

Further, in the disclosure, the terminal may mean a road side unit (RSU) equipped with a terminal function, an RSU equipped with a base station function, or an RSU equipped with a part of the base station function and a part of the terminal function.

In the disclosure, a relay may mean a vehicle that supports V2X communication or a user device that supports communication between devices in a public safety network. Further, in the disclosure, a relay may mean a device equipped with a terminal function, a device equipped with a base station function, or a device equipped with a part of a terminal function and a part of a base station function.

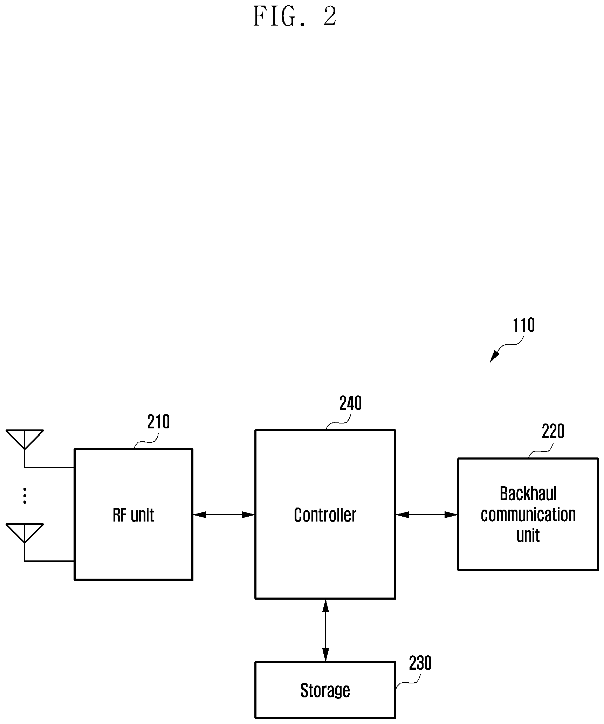

FIG. 2 is a block diagram illustrating a constitution of a base station in a wireless communication system according to an embodiment of the disclosure.

The constitution illustrated in FIG. 2 may be understood as the constitution of the base station 110. Terms such as '... unit' and '... device' used hereinafter mean a unit that processes at least one function or operation, which may be implemented into hardware, software, or a combination of hardware and software.

With reference to FIG. 2, the base station 110 may include a RF unit 210, a backhaul communication unit 220, a storage 230, and a controller 240. However, the components of the base station 110 are not limited to the examples described above. For example, the base station may include more or fewer components than those described above. Further, the RF unit 210, the backhaul communication unit 220, the storage 230, and the controller 240 may be implemented in the form of a single chip. Further, the controller 240 may include one or more processors.

The RF unit 210 may perform functions for transmitting and receiving signals through a wireless channel. For example, the RF unit 210 may perform a conversion function between a baseband signal and a bit string according to the physical layer standard of the system. For example, when transmitting data, the RF unit 210 may encode and modulate a transmission bit string to generate complex symbols. Further, when receiving data, the RF unit 210 may demodulate and decode a baseband signal to restore a received bit string.

Further, the RF unit 210 up-converts a baseband signal into a radio frequency (RF) band signal and transmits the RF band signal through an antenna, and down-converts the RF band signal received through the antenna into a baseband signal. To this end, the RF unit 210 may include a transmission filter, a reception filter, an amplifier, a mixer, an oscillator, a digital to analog convertor (DAC), an analog to digital convertor (ADC), and the like. Further, the RF unit 210 may include a plurality of transmission and reception paths. Furthermore, the RF unit 210 may include at least one antenna array composed of a plurality of antenna elements.

In terms of hardware, the RF unit 210 may be composed of a digital unit and an analog unit, and the analog unit may be composed of a plurality of subunits according to operating power, operating frequency, and the like. The digital unit may be implemented into at least one processor (e.g., digital signal processor (DSP)).

The RF unit 210 transmits and receives signals, as described above. Accordingly, all or part of the RF unit 210 may be referred to as a 'transmitter', a 'receiver', or a 'transceiver'. Further, in the following description, transmission and reception performed through a wireless channel is used to include processing performed by the RF unit 210, as described above.

The backhaul communication unit 220 may provide an interface for communicating with other nodes in the network. That is, the backhaul communication unit 220 may convert a bit string transmitted from the base station 110 to another node, for example, another access node, another base station, a higher node, a core network, and the like into a physical signal, and convert a physical signal received from the other node into a bit string.

The storage 230 may store data such as a basic program, an application program, and configuration information for operation of the base station 110. The storage 230 may be composed of a volatile memory, a non-volatile memory, or a combination of a volatile memory and a non-volatile memory. The storage 230 may provide stored data according to a request from the controller 240.

The controller 240 may control the overall operations of the base station 110. For example, the controller 240 may transmit and receive signals through the RF unit 210 or the backhaul communication unit 220. Further, the controller 240 records and reads data in and from the storage 230. The controller 240 may perform protocol stack functions required by communication standards. According to another implementation example, the protocol stack may be included in the RF unit 210. To this end, the controller 240 may include at least one processor. According to an embodiment, the controller 240 may control the base station 110 to perform operations according to embodiments described later.

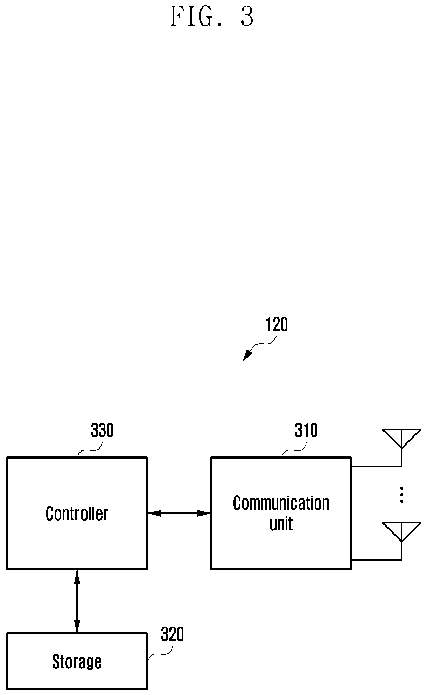

FIG. 3 is a block diagram illustrating a constitution of a UE in a wireless communication system according to an embodiment of the disclosure.

The constitution illustrated in FIG. 3 may be understood as the constitution of the UE 120. Terms such as '... unit' and '... device' used hereinafter mean a unit that processes at least one function or operation, which may be implemented into hardware, software, or a combination of hardware and software.

With reference to FIG. 3, the UE 120 may include a communication unit 310, a storage 320, and a controller 330. However, the components of the UE 120 are not limited to the examples described above. For example, the UE 120 may include more or fewer components than the above-described components. Further, the communication unit 310, the storage 320, and the controller 330 may be implemented in the form of a single chip. Further, the controller 330 may include one or more processors.

The communication unit 310 performs functions for transmitting and receiving signals through a wireless channel. For example, the communication unit 310 may perform a conversion function between a baseband signal and a bit string according to the physical layer standard of the system. For example, when transmitting data, the communication unit 310 may encode and modulate a transmission bit string to generate complex symbols. Further, when receiving data, the communication unit 310 may demodulate and decode a baseband signal to restore a received bit string. Further, the communication unit 310 may up-convert a baseband signal into an RF band signal and transmit the RF band signal through an antenna, and down-convert the RF band signal received through the antenna into a baseband signal. For example, the communication unit 310 may include a transmission filter, a reception filter, an amplifier, a mixer, an oscillator, a DAC, an ADC, and the like.

Further, the communication unit 310 may include a plurality of transmission and reception paths. Furthermore, the communication unit 310 may include at least one antenna array composed of a plurality of antenna elements. In terms of hardware, the communication unit 310 may be composed of digital circuits and analog circuits (e.g., radio frequency integrated circuit (RFIC)). Here, the digital circuit and the analog circuit may be implemented into one package. Further, the communication unit 310 may include a plurality of RF chains. Furthermore, the communication unit 310 may perform beamforming.

The communication unit 310 may transmit and receive signals, as described above. Accordingly, all or part of the communication unit 310 may be referred to as a 'transmitter', a 'receiver', or a 'transceiver'. Further, in the following description, transmission and reception performed through a wireless channel may be used to include processing performed by the communication unit 310, as described above.

The storage 320 may store data such as a basic program, an application program, and configuration information for operation of the UE 120. The storage 320 may be composed of a volatile memory, a non-volatile memory, or a combination of the volatile memory and the non-volatile memory. The storage 320 provides stored data according to a request from the controller 330.

The controller 330 controls the overall operations of the UE 120. For example, the controller 330 may transmit and receive signals through the communication unit 310. Further, the controller 330 records and reads data in and from the storage 320. The controller 330 may perform protocol stack functions required by communication standards. To this end, the controller 330 may include at least one processor or microprocessor, or may be part of a processor. Further, part of the communication unit 310 and the controller 330 may be referred to as a communication processor (CP). According to an embodiment, the controller 330 may control the UE 120 to perform operations according to embodiments described later.

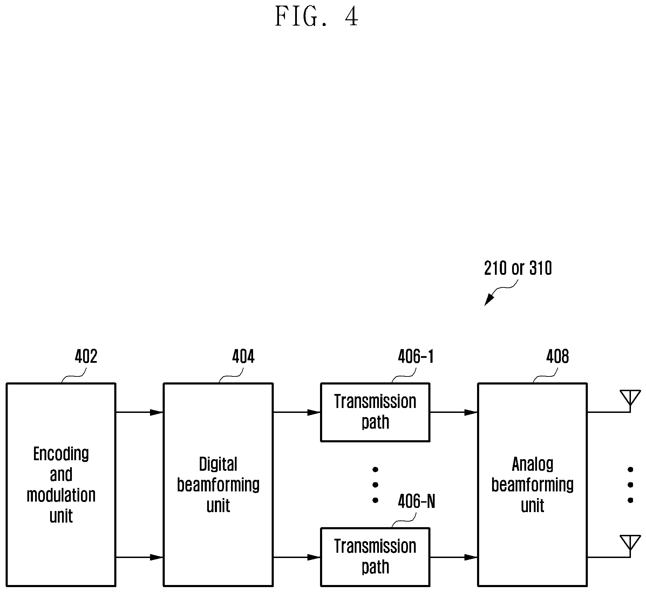

FIG. 4 is a block diagram illustrating a constitution of a communication unit in a wireless communication system according to an embodiment of the disclosure.

FIG. 4 illustrates an example of a detailed constitution of the RF unit 210 of FIG. 2 or the communication unit 310 of FIG. 3. Specifically, FIG. 4 illustrates components for performing beamforming as part of the RF unit 210 of FIG. 2 or the communication unit 310 of FIG. 3.

With reference to FIG. 4, the RF unit 210 or communication unit 310 may include an encoding and modulation unit 402, a digital beamforming unit 404, a plurality of transmission paths 406-1 to 406-N, and an analog beamforming unit 408.

The encoding and modulation unit 402 may perform channel encoding. For channel encoding, at least one of a low density parity check (LDPC) code, a convolution code, or a polar code may be used. The encoding and modulation unit 402 performs constellation mapping to generate modulation symbols.

The digital beamforming unit 404 may perform beamforming on digital signals (e.g., modulation symbols). To this end, the digital beamforming unit 404 multiplies the modulation symbols by beamforming weights. Here, beamforming weights are used for changing the magnitude and phase of the signal, and may be referred to as a 'precoding matrix', 'precoder', and the like. The digital beamforming unit 404 may output digitally beamformed modulation symbols to a plurality of transmission paths 406-1 to 406-N. In this case, according to multiple input multiple output (MIMO) transmission technique, the modulation symbols may be multiplexed or the same modulation symbols may be provided to the plurality of transmission paths 406-1 to 406-N.

The plurality of transmission paths 406-1 to 406-N may convert digitally beamformed digital signals into analog signals. To this end, each of the plurality of transmission paths 406-1 to 406-N may include an inverse fast Fourier transform (IFFT) operation unit, a cyclic prefix (CP) insertion unit, a DAC, and an up-conversion unit. The CP insertion unit is for an orthogonal frequency division multiplexing (OFDM) method, and may be excluded in the case that another physical layer method (e.g., filter bank multi-carrier (FBMC)) is applied. That is, the plurality of transmission paths 406-1 to 406-N may provide an independent signal processing process for a plurality of streams generated through digital beamforming. However, according to an implementation method, some of components of the plurality of transmission paths 406-1 to 406-N may be commonly used.

The analog beamforming unit 408 may perform beamforming on analog signals. To this end, the digital beamforming unit 404 may multiply the analog signals by beamforming weights. Here, beamforming weights are used for changing the magnitude and phase of the signal. Specifically, according to a connection structure between the plurality of transmission paths 406-1 to 406-N and the antennas, the analog beamforming unit 440 may be constituted in various ways. For example, each of the plurality of transmission paths 406-1 to 406-N may be connected to one antenna array. As another example, the plurality of transmission paths 406-1 to 406-N may be connected to one antenna array. As another example, the plurality of transmission paths 406-1 to 406-N may be adaptively connected to one antenna array or may be connected to two or more antenna arrays.

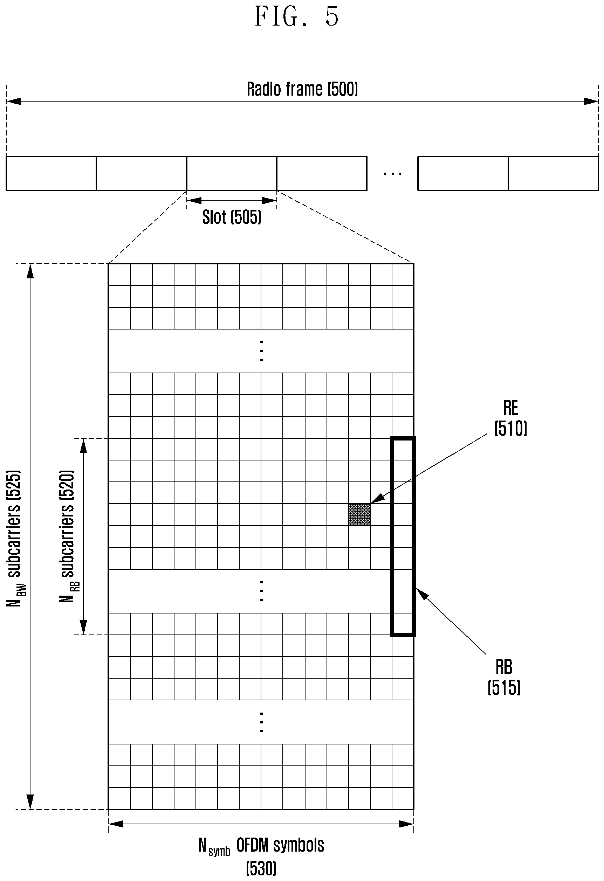

FIG. 5 is a diagram illustrating a structure of time-frequency resources of a wireless communication system according to an embodiment of the disclosure.

With reference to FIG. 5, in a radio resource area, a horizontal axis represents a time domain and a vertical axis represents a frequency domain. The minimum transmission unit in the time domain is an OFDM symbol or a DFT-S-OFDM symbol, wherein the N_{symb} number of OFDM symbols or DFT-S-OFDM symbols 530 may be included in one slot 505. Unlike slots, in the NR system, a length of a subframe may be defined as 1.0 ms, and a length of a radio frame 500 may be defined as 10 ms. The minimum transmission unit in the frequency domain is a subcarrier, and a bandwidth of the entire system transmission band may include total N_{BW} number of subcarriers 525. Specific values such as N_{symb} and N_{BW} may be applied variably according to the system.

The basic unit of the time-frequency resource area is a resource element (RE) 510, which may be represented as an OFDM symbol index or a DFT-S-OFDM symbol index and a subcarrier index. A resource block (RB) 515 may be defined as the N_{RB} number of consecutive subcarriers 520 in the frequency domain. In general, the minimum data transmission unit is an RB unit, and in the NR system, generally N_{symb} = 14 and N_{RB} = 12.

A structure of time-frequency resources as illustrated in FIG. 5 may be applied to a Uu interface. Further, the time-frequency resource structure as illustrated in FIG. 5 may be similarly applied to a sidelink.

The sidelink relay may be authorized to be used in at least one of a specific service, a specific UE, a specific sidelink flow, a specific sidelink bearer, a specific unicast link, a specific source identifier, or a specific destination identifier. The sidelink relay may configure a direct connection with an authenticated UE at a time point of installation. In an embodiment, the sidelink relay may transmit a sidelink relay discovery message and perform a sidelink direct connection configuration procedure with the authenticated UE. In another embodiment, the sidelink relay may receive a sidelink relay discovery message from an authenticated UE, transmit a sidelink relay discovery message to the authenticated UE, and perform a sidelink direct connection configuration procedure with the corresponding UE. In various embodiments, a sidelink relay discovery message may be understood as a message transmitted between a side relay and a UE in order to initiate a sidelink relay discovery procedure between the side relay and the UE, and include a message for discovery or a message for a request for discovery. Configuration information necessary for a sidelink relay UE and a sidelink remote UE to transmit or receive a sidelink relay discovery message may be acquired from the base station or configured in advance. The UE may be authorized to use a sidelink direct connection in at least one of a specific service, a specific UE, a specific sidelink flow, a specific sidelink bearer, a specific unicast link, a specific source identifier, or a specific destination identifier. In an embodiment, the UE may transmit a sidelink discovery message so as to discover other UEs that may perform a sidelink direct connection configuration and perform a sidelink direct connection configuration procedure with the authenticated UE. In another embodiment, the UE may receive a sidelink discovery message from an authenticated UE, transmit the sidelink discovery message to the authenticated UE, and perform a sidelink direct connection configuration procedure with the corresponding UE.

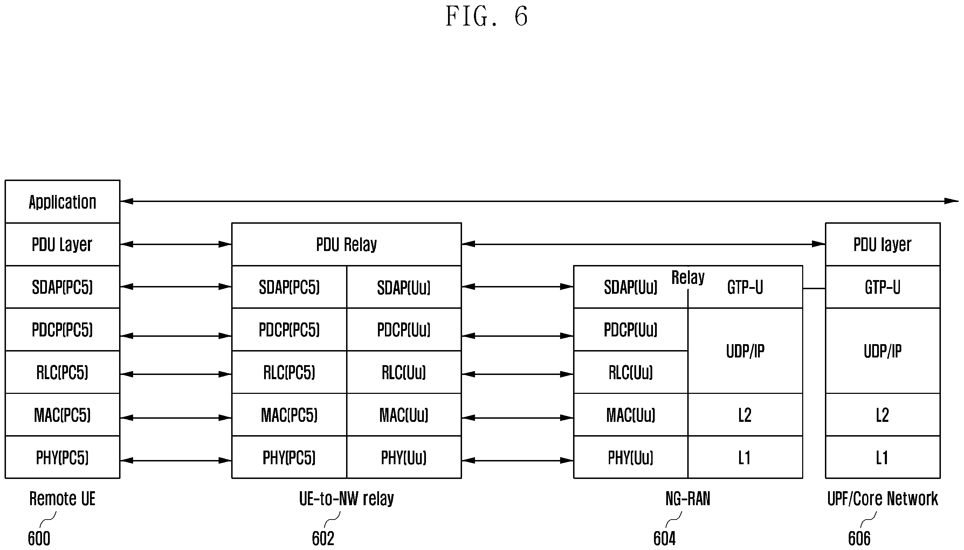

FIG. 6 is a block diagram illustrating a layer-3 UE-to-NW relay protocol stack according to an embodiment of the disclosure.

With reference to FIG. 6, a remote UE 600 may be connected to an UE-to-NW relay 602 through a PC5 interface to transmit and receive data to and from a NG-RAN 604 and a UPF/core network 606. The UE-to-NW relay 602 may be connected to the remote UE 600 through the PC5 interface and to the NG-RAN 604 through an Uu interface, and perform an operation of transmitting uplink data transmitted by the remote UE 600 to the NG-RAN 604 and the UPF/core network 606 or transmitting downlink data of the remote UE 600 transmitted by the NG-RAN 604 and the UPF/core network 606 to the remote UE 600. The UE-to-NW relay 602 may transmit uplink data of the remote UE 600 and downlink data of the remote UE 600 to the NG-RAN 604 and the UPF/core network 606, respectively, to the remote UE, and a relay processing function transmitting to the remote UE 600 may be performed in a PDU relay layer.

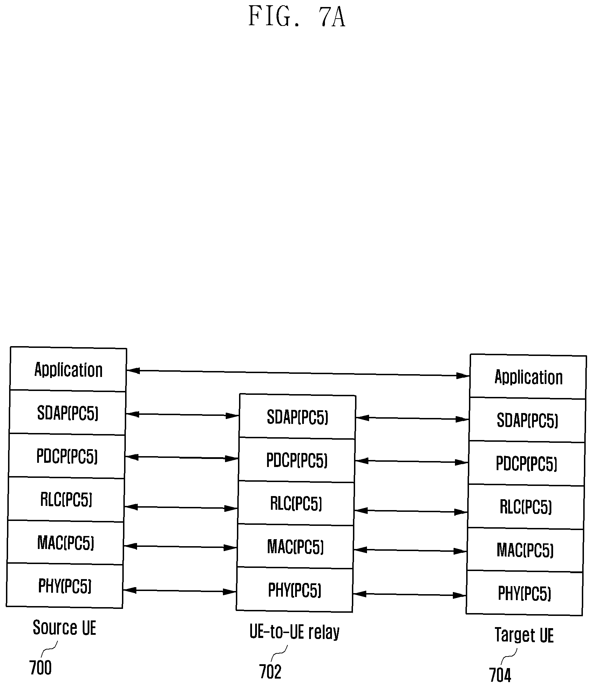

FIG. 7A is a block diagram illustrating a layer-3 UE-to-UE relay user plane protocol stack according to an embodiment of the disclosure.

With reference to FIG. 7A, a source remote UE 700 may be connected to a UE-to-UE relay 702 through a PC5 interface to transmit and receive data to and from a target remote UE 704. The UE-to-UE relay 702 may be connected to the source remote UE 700 and the target remote UE 704 through the PC5 interface and perform an operation of transmitting application data transmitted by the source remote UE 700 to the target remote UE 704 and transmitting application data transmitted by the target remote UE 704 to the source remote UE 700. A relay processing function in which the UE-to-UE relay 702 transmits application data between the source remote UE 700 and the target remote UE 704 may be performed in an upper layer of an SDAP layer, for example, but in a layer (not illustrated in FIG. 7A) corresponding to a PDU layer.

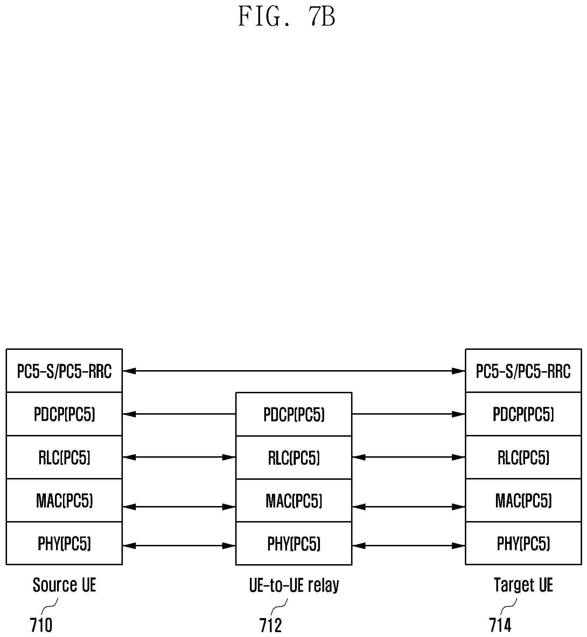

FIG. 7B is a block diagram illustrating a layer-3 UE-to-UE relay control plane protocol stack according to an embodiment of the disclosure.

With reference to FIG. 7B, a source remote UE 710 may be connected to a UE-to-UE relay 712 through a PC5 interface to transmit and receive signaling to and from a target remote UE 714. Signaling exchanged between the source remote UE 710 and the target remote UE 714 may include PC5-S signaling and PC5-RRC messages. PC5-S signaling and PC5-RRC messages may be exchanged for PC5 unicast connection configuration, connection control, and connection release between the source remote UE 710 and the target remote UE 714. The UE-to-UE relay 712 may be connected to the source remote UE 710 and the target remote UE 714 through the PC5 interface and perform an operation of transmitting data transmitted by the source remote UE 710 to the target remote UE 714. A relay processing function in which the UE-to-UE relay 712 transmits PC5-S signaling and PC5-RRC messages between the source remote UE 710 and the target remote UE 714 may be performed in an upper layer of the PDCP layer, for example, in a layer (not illustrated in FIG. 7B) corresponding to a PDU layer.

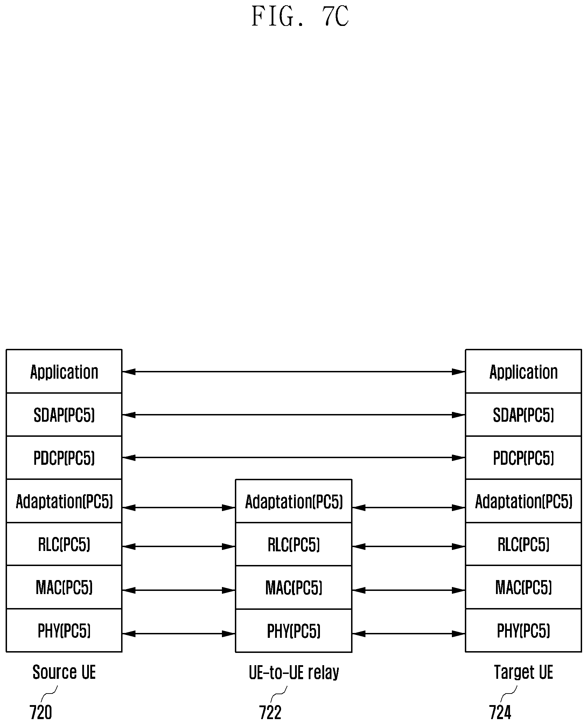

FIG. 7C is a block diagram illustrating a layer-2 UE-to-UE relay user plane protocol stack according to an embodiment of the disclosure.

With reference to FIG. 7C, a source remote UE 720 may be connected to an UE-to-UE relay 722 through a PC5 interface to transmit and receive data to and from a target remote UE 724. The UE-to-UE relay 722 may be connected to the source remote UE 720 and the target remote UE 724 through the PC5 interface to perform an operation of transmitting application data transmitted by the source remote UE 720 to the target remote UE 704 and transmitting application data transmitted by the target remote UE 724 to the source remote UE 720. A relay processing function in which the UE-to-UE relay 722 transmits application data between the source remote UE 720 and the target remote UE 724 may be performed in an adaptation layer.

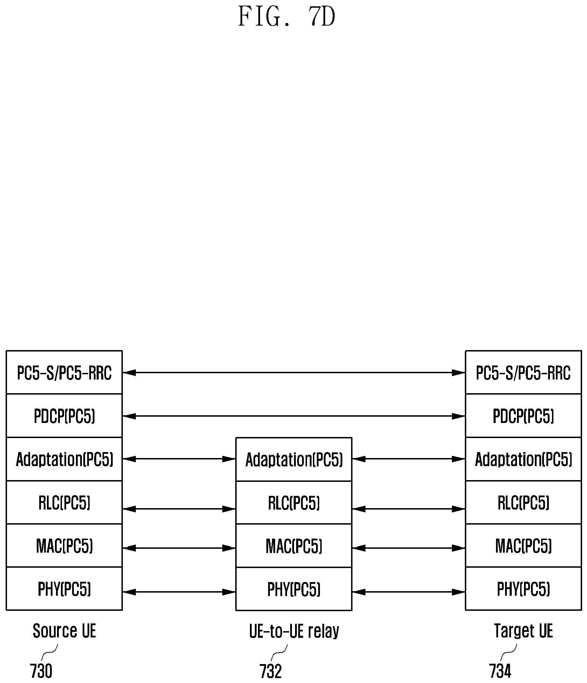

FIG. 7D is a block diagram illustrating a layer-2 UE-to-UE relay control plane protocol stack according to an embodiment of the disclosure.

With reference to FIG. 7D, a source remote UE 730 may be connected to an UE-to-UE relay 732 through a PC5 interface and transmit and receive signaling to and from a target remote UE 734. Signaling exchanged between the source remote UE 730 and the target remote UE 734 may include PC5-S signaling and PC5-RRC messages. PC5-S signaling and PC5-RRC messages may be exchanged for PC5 unicast connection configuration, connection control, and connection release between the source remote UE 730 and the target remote UE 734. The UE-to-UE relay 732 may be connected to the source remote UE 730 and the target remote UE 734 through the PC5 interface and perform an operation of transmitting data transmitted by the source remote UE 730 to the target remote UE 734. A relay processing function in which the UE-to-UE relay 732 transmit PC5-S signaling and PC5-RRC messages between the source remote UE 730 and the target remote UE 734 may be performed in an adaptation layer.

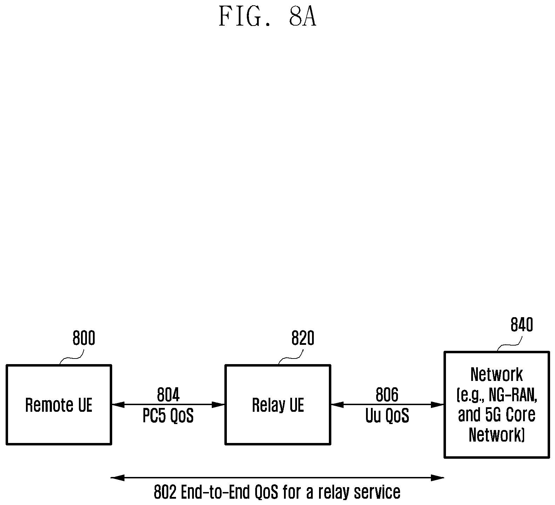

FIG. 8A is a block diagram illustrating QoS mapping of a UE-to-NW relay according to an embodiment of the disclosure.

With reference to FIG. 8A, uplink data and/or downlink data of a remote UE 800 may be transmitted in a PC5 interface and an Uu interface between the remote UE 800 and a network 840 (NG-RAN and 5G Core network) through a relay function of a relay UE 820. An end-to-end QoS 802 for uplink data and/or downlink data of the remote UE 800 may be composed of a PC5 QoS 804 corresponding to a QoS in the PC5 interface and a Uu QoS 806 corresponding to a QoS in the Uu interface. Mapping between the Uu QoS 806 and the PC5 QoS 804 is required, and in the case of a layer-3 UE-to-NW relay, the relay UE 820 may handle mapping between the Uu QoS 806 and the PC5 QoS 804. A QoS mapping operation performed by the relay UE 820 may include an operation of mapping a 5G QoS identifier (5QI) value corresponding to the Uu QoS 806 to a PC5 5QI (PQI) value corresponding to the PC5 QoS 804 and adjusting a packet delay budget (PDB) value corresponding to the PQI. An embodiment of a QoS mapping operation performed by the relay UE 820 (mapping the Uu QoS of the UE to the PC5 QoS of the UE) may include Table 1.

**[Table 1]**

| | |
|---|---|
| - | Each QoS mapping entry includes: |
| - | a mapping between a 5QI value and a PQI value; |
| - | a PQI PDB adjustment factor, for the PC5 communication for the 5G ProSe Layer-3 UE-to-Network Relay operation; |
| - | optionally the Relay Service Code(s) associates with the QoS mapping entry. |

For relay transmission of uplink data and/or downlink data of the remote UE 800, the relay UE 820 may perform a PC5 unicast connection configuration procedure with the remote UE 800, and the relay UE 820 may transmit PC5 QoS 804 information (including at least one or a combination of a PQI value, QoS profile, and a PDB value corresponding to a PQI) to the remote UE 800 through a PC5 unicast connection configuration procedure with the remote UE 800. The PC5 QoS information provided by the relay UE 820 to the remote UE 800 may be per-hop PC5 QoS information, and this may be applied to various embodiments of the disclosure.

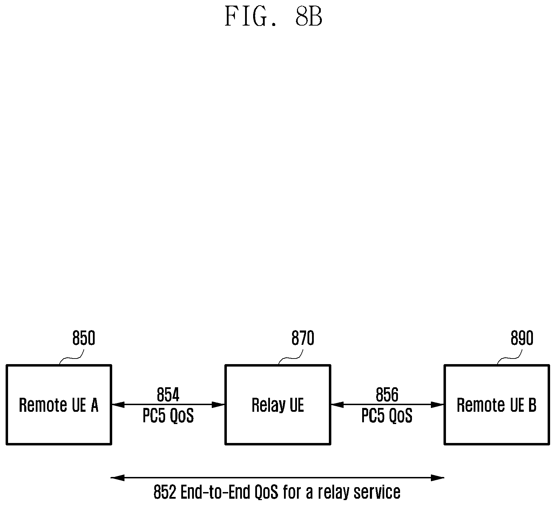

FIG. 8B is a block diagram illustrating QoS mapping of an UE-to-UE relay according to an embodiment of the disclosure.

With reference to FIG. 8B, data of a remote UE A 850 and a remote UE B 890 may be transmitted in a PC5 interface through a relay function of a relay UE 870. An end-to-end QoS 852 for data of the remote UE A 850 and the remote UE B 890 may be composed of a PC5 QoS 854 and a PC5 QoS 856, respectively, corresponding to a QoS in the PC5 interface. The end-to-end QoS 852 may correspond to a QoS of an application in which the remote UE A 850 and the remote UE B 890 will receive a service through relay transmission of the relay UE 870, and the source remote UE may determine an application indicated at an application layer thereof and QoS information therefor. For relay transmission of data between the remote UE A 850 and the remote UE B 890, the relay UE 870 may perform a PC5 unicast connection configuration procedure with each of the remote UE A 850 and the remote UE B 890. In a PC5 unicast connection configuration procedure between the remote UE A 850 and the relay UE 870 and a PC5 unicast connection configuration procedure between the remote UE B 890 and the relay UE 870, the end-to-end QoS 852 for data of the remote UE A 850 and the remote UE B 890 may be transmitted from the remote UE to the relay UE, thereby being exchanged. The relay UE 870 may determine the PC5 QoS 854 and the PC5 QoS 856 based on the end-to-end QoS 852 information acquired from the remote UE A 850 or the remote UE B 890. As an embodiment, the relay UE 870 may map the end-to-end QoS 852 to the PC5 QoS 854 and the PC5 QoS 856. Considering the PC5 QoS 854 and the PC5 QoS 856, the PC5 QoS 854 and the PC5 QoS 856 may be configured to have the same PQI value, QoS profile, and PQI PDB value as those of the end-to-end QoS 852. As an embodiment, the relay UE 870 may map the end-to-end QoS 852 to the PC5 QoS 854 and the PC5 QoS 856. Considering the PC5 QoS 854 and the PC5 QoS 856, when it is determined that the PC5 QoS 854 and the PC5 QoS 856 cannot be configured to have the same PQI value, QoS profile, and PQI PDB value as those of the end-to-end QoS 852, the PC5 QoS 854 and the PC5 QoS 856 may be configured to have a PQI value, a QoS profile, and a PQI PDB value similar to those of the end-to-end QoS 852. For example, the sum of a PDB value of the PC5 QoS 854 and a PDB value of the PC5 QoS 856 may be configured to correspond to a PDB value of the QoS 852. The relay UE 870 may transmit QoS information (including at least one or a combination of a PQI value, a QoS profile, and a PDB value corresponding to the PQI) corresponding to the PC5 QoS 854 and QoS information (including at least one or a combination of a PQI value, a QoS profile, and a PDB value corresponding to the PQI) corresponding to the PC5 QoS 856 to the remote UE A 850 and the remote UE B 890, respectively.

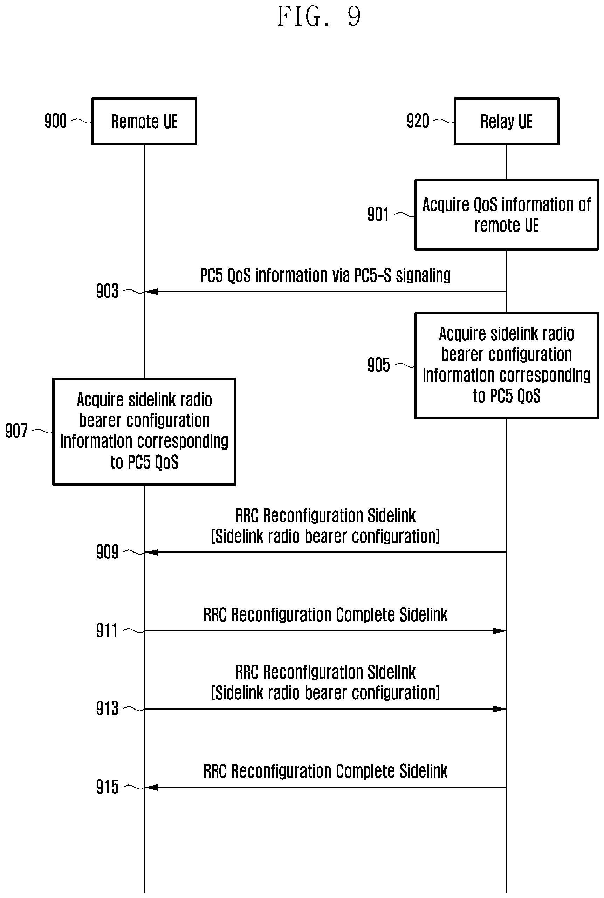

FIG. 9 is a diagram illustrating signal flow between a remote UE and a relay UE that process sidelink radio bearer configuration information corresponding to a QoS of the remote UE in a layer-3 UE-to-NW relay according to an embodiment of the disclosure.

With reference to FIG. 9, a remote UE 900 may transmit and receive data to and from the network through a relay function of a relay UE 920. In step 901, the relay UE 920 may acquire QoS information of the remote UE 900 from the network. The relay UE 920 may configure PC5 QoS information mapped to Uu QoS information of the remote UE 900. An operation in which the relay UE 920 acquires QoS information of the remote UE 900 in step 901 is described with reference to the embodiment of FIG. 8A. In step 903, the relay UE 920 may transmit PC5 QoS information to the remote UE 900. An operation of step 903 may be performed through a PC5 unicast connection configuration procedure between the relay UE 920 and the remote UE 900.

In step 905, the relay UE 920 may acquire sidelink radio bearer configuration information corresponding to the PC5 QoS. In step 905, the relay UE 920 may acquire sidelink radio bearer configuration information corresponding to the PC5 QoS through a dedicated RRC message (e.g., RRCReconfiguration) or a system information block (SIB) message from the base station. The sidelink radio bearer configuration information in step 905 may include radio bearer configuration information necessary for the relay UE 920 to transmit downlink data transmitting from the network to the remote UE 900 through the PC5 interface.

In step 907, the remote UE 900 may acquire sidelink radio bearer configuration information corresponding to the PC5 QoS. In step 907, sidelink radio bearer configuration information corresponding to the PC5 QoS may be acquired by the remote UE 900 from the base station through a dedicated RRC message (e.g., RRCReconfiguration), a SIB message, or a pre-configuration. The sidelink radio bearer configuration information in step 907 may include radio bearer configuration information necessary for the remote UE 900 to transmit uplink data transmitting to the network through the relay UE 920 through the PC5 interface.

If the relay UE 920 determines that there is configuration information that needs to be shared and synchronized with the remote UE 900 among the sidelink radio bearer configuration information acquired in step 905, the relay UE 920 may transmit an RRC reconfiguration sidelink message including sidelink radio bearer configuration information to the remote UE 900 in step 909. In step 911, the remote UE 900 may transmit an RRC reconfiguration complete sidelink message to the relay UE 920 in response to the RRC reconfiguration sidelink message in step 909.

If the remote UE 900 determines that there is configuration information that needs to be shared and synchronized with the relay UE 920 among the sidelink radio bearer configuration information acquired in step 907, the remote UE 900 may transmit an RRC reconfiguration sidelink message including sidelink radio bearer configuration information to the relay UE 920 in step 913. In step 915, the relay UE 920 may transmit an RRC reconfiguration complete sidelink message to the remote UE 900 in response to the RRC reconfiguration sidelink message in step 913.

The sidelink radio bearer configuration information acquired by the relay UE 920 in step 905 may not include a reception (RX) parameter of the remote UE 900, and the remote UE 900 may arbitrarily configure a reception (RX) parameter. Further, the sidelink radio bearer configuration information acquired by the remote UE 900 in step 907 may not include a reception (RX) parameter of the relay UE 920, and the relay UE 920 may arbitrarily configure a reception (RX) parameter.

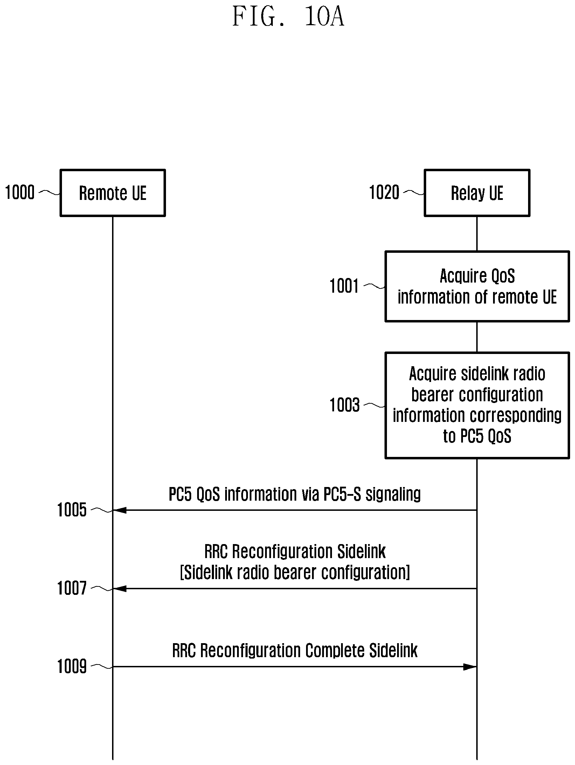

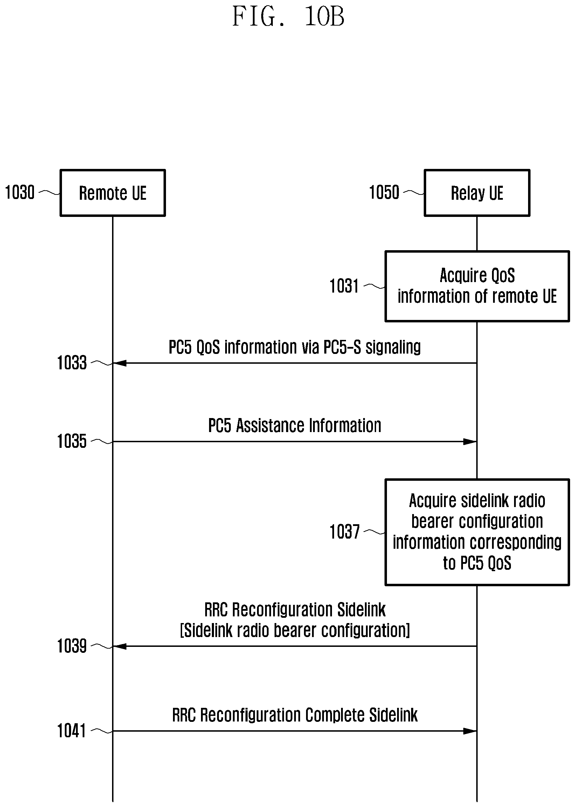

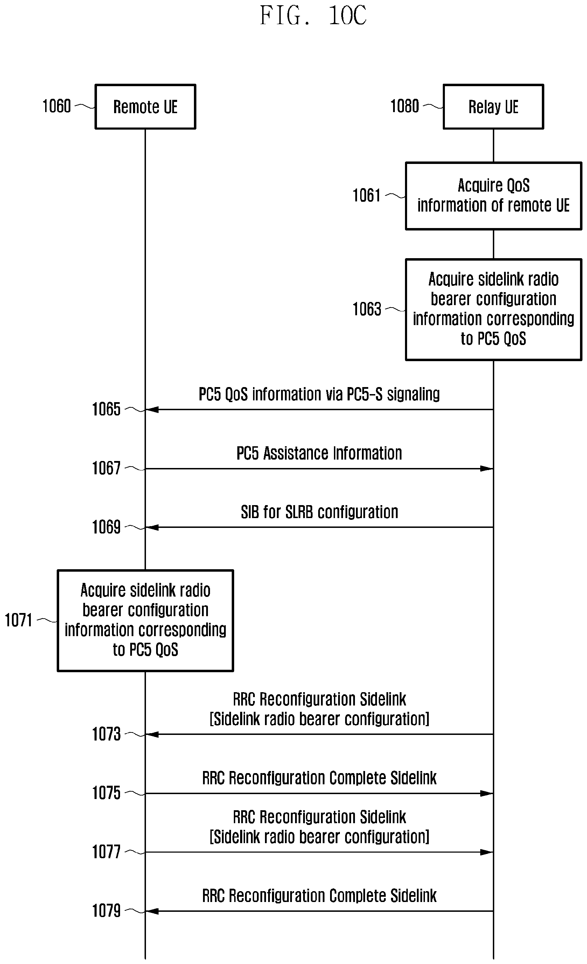

In steps 905 and 907, the relay UE 920 and the remote UE 900 acquire a sidelink radio bearer configuration corresponding to the acquired PC5 QoS information through the base station to which each of the relay UE 920 and the remote UE 900 is connected or through a pre-configuration. That is, because sidelink radio bearer configurations acquired by each of the relay UE 920 and the remote UE 900 do not match, an error may occur in a sidelink unicast connection configuration between the remote UE 900 and the relay UE 920. In the case that an error occurs, the remote UE 900 and the relay UE 920 report a sidelink unicast connection configuration error to the base station connected to each thereof and perform an operation of determining that the sidelink unicast connection configuration has failed. The base station and the network may take measures of adjusting a sidelink unicast connection configuration parameter configuration corresponding to the PC5 QoS configuration based on the error report from the remote UE 900 or the relay UE 920, but reliability of communication through the sidelink relay may decrease due to additional measures such as parameter adjustment operations, and communication delays may occur in situations requiring emergency communication through the sidelink relay. Therefore, as in the embodiment of FIG. 9, the transmitting UE of the sidelink unicast connection acquires sidelink radio bearer configuration information corresponding to the PC5 QoS parameters and transmits the sidelink radio bearer configuration information to the receiving UE, and instead of applying an operation of arbitrarily configuring the receiving parameter, in the case of a system in which a layer-3 UE-to-NW based sidelink relay is introduced, the relay UE may apply operations of acquiring sidelink radio bearer configuration information (including a transmission parameter and a reception parameter) corresponding to a PC5 QoS parameter for an unicast connection between the remote UE and the relay UE and transmitting the sidelink radio bearer configuration information to the remote UE. Next, with reference to FIGS. 10A, 10B, and 10C, an embodiment in which the relay UE acquires sidelink radio bearer configuration information corresponding to the PC5 QoS parameter and shares the sidelink radio bearer configuration information with the remote UE will be described.

FIG. 10A is a signal flow diagram illustrating an operation of a remote UE and a relay UE that process sidelink radio bearer configuration information corresponding to a QoS of the remote UE in a layer-3 UE-to-NW relay according to an embodiment of the disclosure.

With reference to FIG. 10A, a remote UE 1000 may transmit and receive data to and from the network through a relay function of a relay UE 1020. In step 1001, the relay UE 1020 may acquire QoS information of the remote UE 1000 from the network. The relay UE 1020 may configure PC5 QoS information mapped to Uu QoS information of the remote UE 1000. An operation in which the relay UE 1020 acquires QoS information of the remote UE 1000 in step 1001 is the same as that of the embodiment of FIG. 8A.

In step 1003, the relay UE 1020 may acquire sidelink radio bearer configuration information corresponding to the PC5 QoS. In step 1003, the relay UE 1020 may acquire sidelink radio bearer configuration information corresponding to the PC5 QoS through a dedicated RRC message (e.g., RRCReconfiguration) or an SIB message from the base station.

Sidelink radio bearer configuration information in step 1005 may include radio bearer configuration information necessary for the relay UE 1020 to transmit downlink data transmitting from the network to the remote UE 1000 through the PC5 interface, and radio bearer configuration information necessary for the remote UE 1000 to transmit uplink data to the network through the relay UE 1020 through the PC5 interface. In step 1005, the relay UE 1020 may transmit PC5 QoS information to the remote UE 1000. Step 1005 is not an essential procedure and may be performed in the case that it is determined that the remote UE 1000 needs to use PC5 QoS information, for example, in the case that the remote UE 1000 needs to know PDB information of a PQI (the remote UE may use PDB information of the PQI for selecting transmission resources for transmitting uplink data).

In order to transmit sidelink radio bearer configuration information acquired in step 1003 to the remote UE 1000, the relay UE 1020 may transmit an RRC reconfiguration sidelink message in step 1007. Sidelink radio bearer configuration information transmitted by the relay UE 1020 in step 1007 may include configuration information on a reception (RX) parameter of the remote UE 1000. As an embodiment in which the relay UE 1020 configures sidelink radio bearer configuration information, the relay UE 1020 may acquire a transmission (TX) parameter of the sidelink radio bearer to be applied by the relay UE 1020 and the remote UE 1000 through an SIB message or an RRC reconfiguration message of the base station, and the relay UE 1020 may arbitrarily configure a reception (RX) parameter to be applied by the remote UE 1000 and the relay UE 1020. As another embodiment in which the relay UE 1020 configures sidelink radio bearer configuration information, the relay UE 1020 may acquire a transmission (TX) parameter and a reception (RX) parameter of the sidelink radio bearer to be applied by the relay UE 1020 and the remote UE 1000 through an SIB message or an RRC reconfiguration message of the base station. The base station may configure a transmission (TX) parameter and a reception (RX) parameter corresponding to the PC5 QoS through an RRC reconfiguration message or an SIB message so that the relay UE 1020 may configure a transmission (TX) parameter and a reception (RX) parameter. In step 1009, the remote UE 1000 may transmit an RRC reconfiguration complete sidelink message to the relay UE 1020 in response to the RRC reconfiguration sidelink message in step 1007.

In FIG. 10A, in addition to an operation of in which the relay UE acquires sidelink radio bearer configuration corresponding to a downlink PC5 QoS of the remote UE and provides sidelink radio bearer configuration information to the remote UE, the case of performing operations of acquiring sidelink radio bearer configuration corresponding to the uplink PC5 QoS of the remote UE and providing sidelink radio bearer configuration information to the remote UE has been described as an example. As another embodiment, the relay UE may be limited to perform an operation of acquiring sidelink radio bearer configuration information corresponding to the uplink PC5 QoS of the remote UE only in the case that the remote UE is not in an RRC_CONNECTED state in which the RRC connection with the base station is configured (in the case of one of the remote UE is in an RRC_IDLE state, in an RRC_INACTIVE state, or in an out-of-coverage state) or in the case that the remote UE is in an out-of-coverage state (in the case that the remote UE is not under the control of the base station). This will be described with reference to the embodiment of FIG. 10B.

FIG. 10B is a signal flow diagram illustrating an operation of a remote UE and a relay UE that process sidelink radio bearer configuration information corresponding to a QoS of the remote UE in a layer-3 UE-to-NW relay according to another embodiment of the disclosure.

With reference to FIG. 10B, a remote UE 1030 may transmit and receive data to and from the network through a relay function of a relay UE 1050. In step 1031, the relay UE 1050 may acquire QoS information of the remote UE 1030 from the network. The relay UE 1050 may configure PC5 QoS information mapped to Uu QoS information of the remote UE 1030. In step 1031, an operation in which the relay UE 1050 acquires QoS information of the remote UE 1030 is the same as that of the embodiment of FIG. 8A. In step 1033, the relay UE 1050 may transmit PC5 QoS information to the remote UE 1030.

In step 1035, because the remote UE 1030 cannot perform a side link radio bearer configuration corresponding to the PC5 QoS, the remote UE 1030 may transmit, to the relay UE 1050, a PC5 assistance information message notifying whether assistance from the relay UE 1050 is needed. In various embodiments of the disclosure, a PC5 assistance information message notifying QoS information has been described, but PC5-S signaling may be used. The PC5 assistance information message in step 1035 may include at least one or a combination of an indicator indicating an RRC state of the remote UE 1030 (e.g., an indicator indicating whether the remote UE 1030 is in an RRC CONNECTED state or an indicator indicating whether the remote UE 1030 is in an out-of-coverage state) or an indicator requesting a sidelink radio bearer configuration. As an embodiment of an operation of the remote UE 1030 that processes transmission of a PC5 assistance information message, in order to notify whether the relay UE 1050 needs to process a sidelink radio bearer configuration corresponding to the uplink PC5 QoS, the remote UE 1030 may always transmit a PC5 assistance information message to the relay UE 1050. As another embodiment of an operation of the remote UE 1030 that processes transmission of a PC5 assistance information message, in the case that the remote UE 1030 is in not an RRC_CONNECTED state and is in an out-of-coverage state, or in the case that it is determined that the remote UE 1030 cannot handle a sidelink wireless configuration corresponding to the uplink PC5 QoS, in order to notify that the relay UE 1050 needs to process the sidelink radio bearer configuration corresponding to the uplink PC5 QoS, the remote UE 1030 may transmit a PC5 assistance information message to the relay UE 1050.

In step 1037, the relay UE 1050 may acquire sidelink radio bearer configuration information corresponding to the PC5 QoS. In step 1037, the relay UE 1050 may acquire sidelink radio bearer configuration information corresponding to the PC5 QoS through a dedicated RRC message (e.g., RRCReconfiguration) or an SIB message from the base station. The relay UE 1050 may acquire radio bearer configuration information necessary for transmitting downlink data transmitting from the network to the remote UE 1030 through the PC5 interface. If it is determined that the remote UE 1030 has transmitted a PC5 assistance information message requesting processing of sidelink radio bearer configuration information corresponding to the uplink PC5 QoS in step 1035, the remote UE 1030 may acquire radio bearer configuration information necessary for transmitting uplink data to the network through the relay UE 1050 through the PC5 interface. In order to transmit the sidelink radio bearer configuration information acquired in step 1037 to the remote UE 1030, the relay UE 1050 may transmit an RRC reconfiguration sidelink message in step 1039.

If it is determined that the remote UE 1030 has requested sidelink radio bearer configuration information corresponding to the PC5 QoS of uplink data to the relay UE 1050, sidelink radio bearer configuration information transmitted by the relay UE 1050 in step 1039 may include configuration information on a reception (RX) parameter of the remote UE 1030 and configuration information on a transmission (TX) parameter of the remote UE 1030. As an embodiment in which the relay UE 1050 configures sidelink radio bearer configuration information corresponding to the downlink and the uplink, the relay UE 1050 may acquire a transmission (TX) parameter of the sidelink radio bearer to be applied by the relay UE 1050 and the remote UE 1030 through an RRC reconfiguration message or an SIB message of the base station, and the relay UE 1050 may arbitrarily configure a reception (RX) parameter to be applied by the remote UE 1030 and the relay UE 1050. As another embodiment in which the relay UE 1050 configures sidelink radio bearer configuration information, the relay UE 1050 may acquire a transmission (TX) parameter and a reception (RX) parameter of the sidelink radio bearer to be applied by the relay UE 1050 and the remote UE 1030 through an RRC reconfiguration message or an SIB message of the base station. The base station may configure a transmission (TX) parameter and a reception (RX) parameter corresponding to the PC5 QoS through an RRC reconfiguration message or an SIB message so that the relay UE 1050 may configure a transmission (TX) parameter and a reception (RX) parameter. In step 1041, the remote UE 1030 may transmit an RRC reconfiguration complete sidelink message to the relay UE 1050 in response to the RRC reconfiguration sidelink message in step 1039.

In the embodiment of FIG. 10B, if it is determined that the remote UE 1030 may directly configure sidelink radio bearer configuration information corresponding to the PC5 QoS of uplink data, that is, in the case that the remote UE 1030 does not request sidelink radio bearer configuration information corresponding to the PC5 QoS of uplink data to the relay UE 1050, the remote UE 1030 may perform steps 907, 913, and 915 of FIG. 9 to acquire and process sidelink radio bearer configuration information corresponding to the PC5 QoS of uplink data.

As another embodiment, instead of an operation of the relay UE acquiring and configuring sidelink radio bearer configuration information corresponding to the uplink PC5 QoS of the remote UE, in the case that the remote UE is not in an RRC_CONNECTED state in which the RRC connection with the base station is configured (one of the case that the remote UE is in an RRC_IDLE state, the case that the remote UE is in an RRC_INACTIVE state, or the case that the remote UE is in an out-of-coverage state) or in the case that the remote UE is in an out-of-coverage state (in the case that the remote UE is not under the control of the base station), the relay UE may perform an operation of transmitting sidelink radio bearer configuration information corresponding to a PC5 QoS that may be acquired from an SIB message or an RRCReconfiguration message of the base station to the remote UE through the PC5 interface, and the remote UE may perform an operation of acquiring and configuring sidelink radio bearer configuration information corresponding to a PC5 QoS of the uplink with reference to sidelink radio bearer configuration information corresponding to the PC5 QoS received from the relay UE. This will be described with reference to the embodiment of FIG. 10C.

FIG. 10C is a signal flow diagram illustrating an operation of a remote UE and a relay UE that process sidelink radio bearer configuration information corresponding to a QoS of the remote UE in a layer-3 UE-to-NW relay according to another embodiment of the disclosure.

With reference to FIG. 10C, a remote UE 1060 may transmit and receive data to and from the network through a relay function of a relay UE 1080. In step 1061, the relay UE 1080 may acquire QoS information of the remote UE 1060 from the network. The relay UE 1080 may configure PC5 QoS information mapped to Uu QoS information of the remote UE 1060. In step 1061, an operation in which the relay UE 1080 acquires QoS information of the remote UE 1060 is the same as that of the embodiment of FIG. 8A. In step 1063, the relay UE 1080 may acquire sidelink radio bearer configuration information corresponding to the PC5 QoS. In step 1063, the relay UE 1080 may acquire sidelink radio bearer configuration information corresponding to the PC5 QoS through a dedicated RRC message (e.g., RRCReconfiguration) or an SIB message from the base station. The relay UE 1080 may acquire radio bearer configuration information necessary for transmitting downlink data transmitted from the network to the remote UE 1060 through the PC5 interface.

In step 1065, the relay UE 1080 may transmit PC5 QoS information to the remote UE 1060. In step 1065, because the remote UE 1060 cannot perform sidelink radio bearer configuration corresponding to the PC5 QoS, the remote UE 1060 may transmit, to the relay UE 1080, a PC5 assistance information message notifying whether assistance from the relay UE 1080 is needed. The PC5 assistance information message in step 1067 may include at least one or a combination of an RRC state (e.g., an indicator indicating whether the remote UE 1060 is in an RRC CONNECTED state or an indicator indicating whether the remote UE 1060 is in an out-of-coverage state) of the remote UE 1060 or an indicator requesting a sidelink radio bearer configuration. As an embodiment of an operation of the remote UE 1060 that processes transmission of a PC5 assistance information message, in order to notify whether the relay UE 1080 needs to process a sidelink radio bearer configuration corresponding to an uplink PC5 QoS, the remote UE 1060 may always transmit a PC5 assistance information message to the relay UE 1080. As another embodiment of an operation of the remote UE 1060 that processes transmission of a PC5 assistance information message, in the case that the remote UE 1060 is not in an RC_CONNECTED state or is in an out-of-coverage state, or in the case that it is determined that the remote UE 1060 cannot handle a sidelink radio bearer configuration corresponding to the uplink PC5 QoS, in order to notify the need to process a sidelink radio bearer configuration corresponding to the uplink PC5 QoS, the relay UE 1080 may transmit a PC5 assistance information message to the remote UE 1060.

If it is determined that the relay UE 1080 has received a PC5 assistance information message requesting processing of sidelink radio bearer configuration information corresponding to the uplink PC5 QoS from the remote UE 1060 in step 1067, in order to assist a sidelink radio bearer configuration necessary for the remote UE 1060 to transmit uplink data to the network through the PC5 interface, the relay UE 1080 may transmit sidelink radio bearer configuration information corresponding to the PC5 QoS that may be acquired from an SIB message or an RRCReconfiguration message of the base station to the remote UE 1060 in step 1069.

In step 1071, the remote UE 1060 may acquire sidelink radio bearer configuration information corresponding to the uplink PC5 QoS from sidelink radio bearer configuration information corresponding to the PC5 QoS acquired in step 1069. If the relay UE 1080 determines that there is configuration information that needs to be shared and synchronized with the remote UE 1060 among the sidelink radio bearer configuration information acquired in step 1063, the relay UE 1080 may transmit an RRC reconfiguration sidelink message including sidelink radio bearer configuration information to the remote UE 1060 in step 1073. In step 1075, the remote UE 1060 may transmit an RRC reconfiguration complete sidelink message to the relay UE 1080 in response to the RRC reconfiguration sidelink message in step 1073.

If the remote UE 1060 determines that there is configuration information that needs to be shared and synchronized with the relay UE 1080 among the sidelink radio bearer configuration information acquired in step 1071, the remote UE 1060 may transmit an RRC reconfiguration sidelink message including sidelink radio bearer configuration information to the relay UE 1080 in step 1077. In step 1079, the relay UE 1080 may transmit an RRC reconfiguration complete sidelink message to the remote UE 1060 in response to the RRC reconfiguration sidelink message in step 1077. As an embodiment, the sidelink radio bearer configuration information acquired by the relay UE 1080 in step 1063 may not include a reception (RX) parameter of the remote UE 1060, and the remote UE 1060 may arbitrarily configure a reception (RX) parameter. Further, the sidelink radio bearer configuration information acquired by the remote UE 1060 in step 1071 may not include a reception (RX) parameter of the relay UE 1080, and the relay UE 1080 may arbitrarily configure a reception (RX) parameter. As another embodiment, the sidelink radio bearer configuration information acquired by the relay UE 1080 in step 1063 may include configuration information on the reception (RX) parameter of the remote UE 1060. Further, the sidelink radio bearer configuration information acquired by the remote UE 1060 in step 1071 may include configuration information on a reception (RX) parameter of the relay UE 1080. The base station may configure a transmission (TX) parameter and a reception (RX) parameter corresponding to a PC5 QoS through an RRC reconfiguration message or an SIB message so that the relay UE 1080 and the remote UE 1060 configure a transmission (TX) parameter and a reception (RX) parameter.

In the embodiment of FIG. 10C, if it is determined that the remote UE 1060 may directly configure sidelink radio bearer configuration information corresponding to the PC5 QoS of uplink data, that is, in the case that the remote UE 1060 does not request sidelink radio bearer configuration information corresponding to the PC5 QoS of uplink data to the relay UE 1080, the remote UE 1060 may perform steps 907, 913, and 915 of FIG. 9 to acquire and process sidelink radio bearer configuration information corresponding to the PC5 QoS of uplink data.

In the case that data is transmitted and received through a sidelink interface between the remote UE and another remote UE through a sidelink UE-to-UE relay, the remote UE or the relay UE may configure a sidelink radio bearer corresponding to the PC5 QoS. For example, the remote UE or the relay UE may acquire sidelink radio bearer configuration information corresponding to a PC5 QoS 854 to a PC5 QoS 856 in the embodiment of FIG. 8B. As a method for the remote UE to acquire PC5 QoS information, the remote UE may acquire end-to-end QoS information corresponding to a service application and per hop PC5 QoS information mapped to the end-to-end QoS information. The per hop PC5 QoS information may include a PQI value or a PC5 QoS profile. The remote UE may provide per hop PC5 QoS information to the relay UE.

As a method for the relay UE to acquire PC5 QoS information, the remote UE may acquire end-to-end QoS information corresponding to a service application to be serviced through the relay UE and provide the end-to-end QoS information to the relay UE, and the relay UE may acquire per hop PC5 QoS information mapped to end-to-end QoS information. PC5 QoS information may include a PQI value and a PC5 QoS profile. The relay UE may provide per hop PC5 QoS information to the remote UE.

As a method for the remote UE or the relay UE to acquire sidelink radio bearer configuration information corresponding to a PC5 QoS 854 to a PC5 QoS 856, the remote UE or the relay UE may acquire sidelink radio bearer configuration information corresponding to per hop PC5 QoS information through an SIB message or an RRC reconfiguration message transmitted by the base station, or may acquire preconfigured sidelink radio bearer configuration information corresponding to per hop PC5 QoS information through a pre-configuration. Sidelink radio bearer configuration information corresponding to per hop PC5 QoS information through the base station or the pre-configuration may include a configuration for a transmission (TX) parameter and a reception (RX) parameter that should be synchronized therewith, and may not include a configuration for the reception (RX) parameter that do not need to be synchronized with the transmission (TX) parameter. The transmission (TX) parameter and the reception (RX) parameter that should be synchronized therewith may be shared from the transmitting UE to the receiving UE through the PC5 interface. The reception (RX) parameter that does not need to be synchronized with the transmission (TX) parameter may be arbitrarily configured by the remote UE or the relay UE corresponding to the receiving UE. In the case that the remote UE and the relay UE are both transmitting UEs and receiving UEs, there may occur cases that the transmission (TX) parameter and the reception (RX) parameter that needs to be synchronized therewith may be acquired through other base stations to which they are connected, or that one UE acquires a transmission (TX) parameter and a reception (RX) parameter that needs to be synchronized therewith through the base station, and that the other UE acquires a transmission (TX) parameter and a reception (RX) parameter that needs to be synchronized therewith through a pre-configuration. This may cause an error in a sidelink radio bearer configuration between two UEs (remote UE and relay UE), and the base station to which the UE is connected may take measurements that correct the error in the sidelink radio bearer configuration corresponding to the PC5 QoS; thus, a delay may occur in data transmission and reception through a sidelink relay. This may reduce reliability in the case of receiving an emergency service through the sidelink relay.

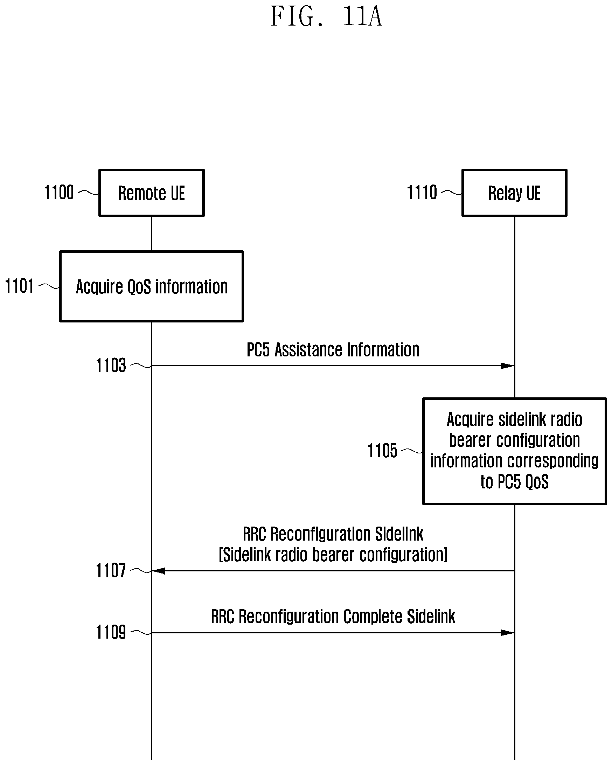

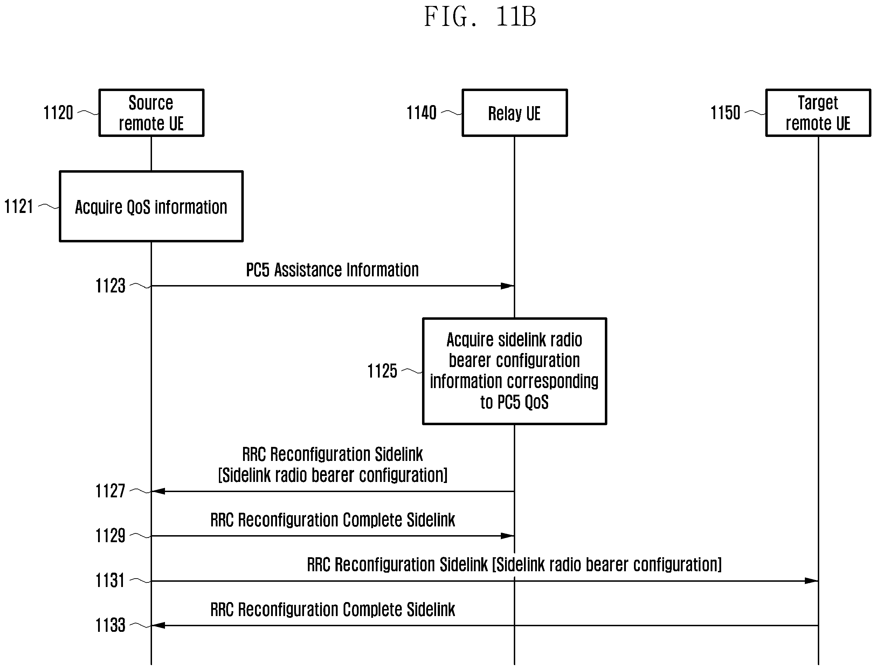

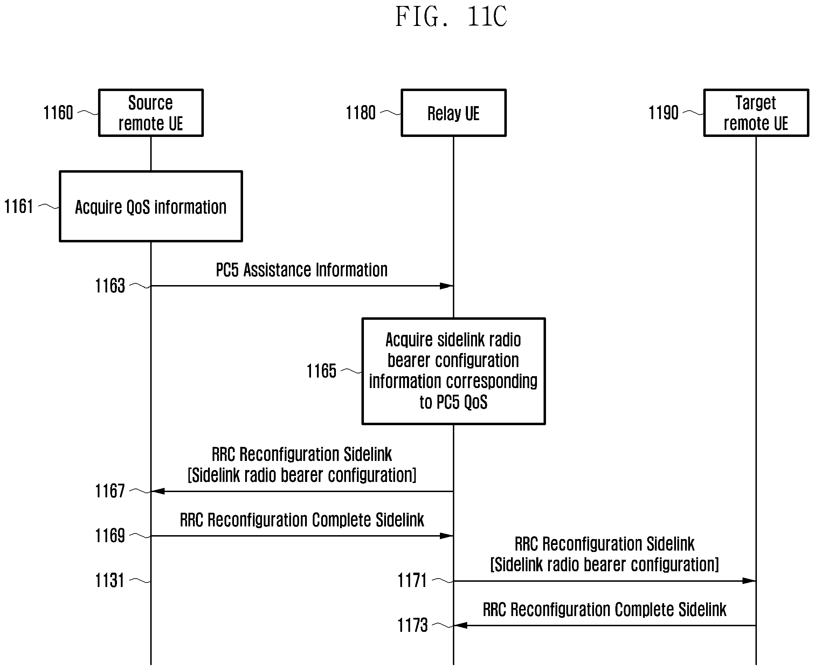

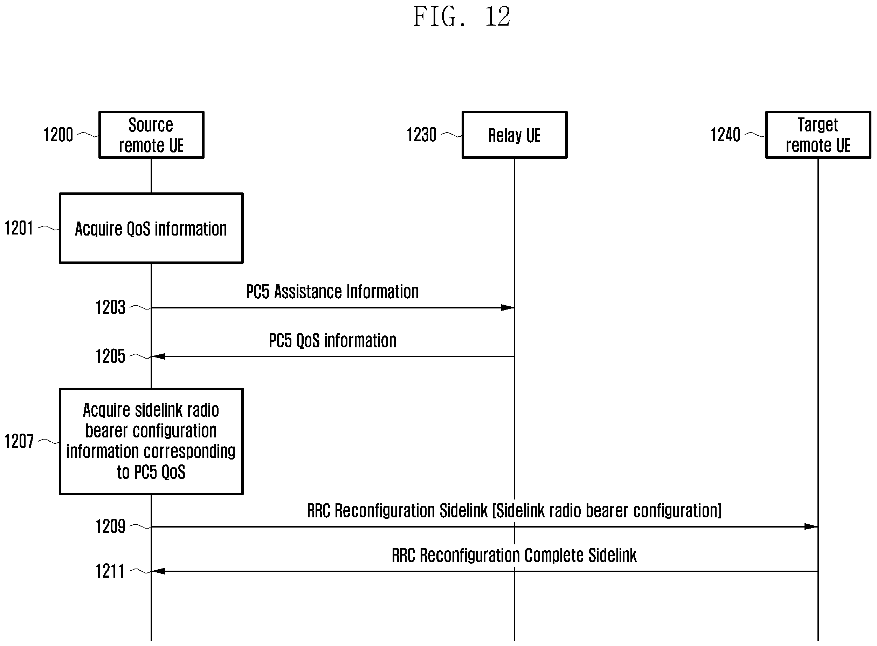

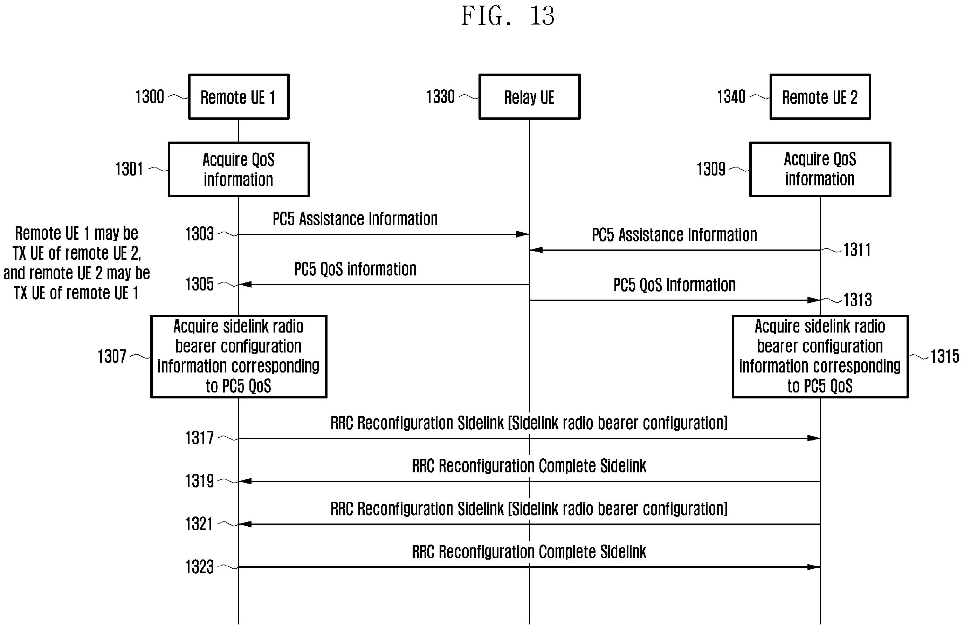

Therefore, in the disclosure, a method in which a sidelink radio bearer configuration corresponding to per hop PC5 QoS between the remote UE and the relay UE may be synchronized without an error will be described in various embodiments of FIGS. 11 to 13. A method capable of synchronizing a sidelink radio bearer configuration corresponding to per hop PC5 QoS between the remote UE and the relay UE without an error may include a method in which the sidelink relay configures a sidelink radio bearer corresponding to per hop PC5 QoS to the remote UE, a method in which the source remote UE configures a sidelink radio bearer corresponding to per hop PC5 QoS, and a method in which the transmitting remote UE configures a sidelink radio bearer corresponding to per hop PC5 QoS. FIGS. 11A to 11C illustrate embodiments of a method in which a sidelink relay configures a sidelink radio bearer corresponding to per hop PC5 QoS. FIG. 12 illustrates an embodiment of a method in which a source remote UE configures a sidelink radio bearer corresponding to per hop PC5 QoS. FIG. 13 illustrates an embodiment of a method in which a transmitting remote UE configures a sidelink radio bearer corresponding to per hop PC5 QoS. PC5 assistance information transmitting from the remote UE to the relay UE in FIGS. 11A, 11B, 11C, 12, and 13 may include at least one or a combination of information in Table 2. Further, FIGS. 11, 12, and 13 separately illustrate a method of configuring sidelink bearers for the relay UE, the source remote UE, and the transmitting remote UE for convenience of description, and it is possible to couple and perform operations of FIGS. 11, 12, and 13.

**[Table 2]**

| | |
|---|---|
| Target remote UE identifier, DST layer 2 ID, source remote UE identifier, SRC layer 2 ID, PQI, PC5 QoS profile, RRC state information of remote UE (one of RRC_IDLE, RRC_INACTIVE, and out-of-coverage), and sidelink radio bearer configuration information request indicator | |

The PQI and PC5 QoS profiles in Table 2 may be end-to-end QoS information. Further, in the case that the remote UE determines per hop PC5 QoS corresponding to an end-to-end QoS, the PQI and PC5 QoS profiles may be end-to-end QoS information or per hop PC5 QoS information.

In FIGS. 11A, 11B, 11C, 12, and 13, the RRC reconfiguration sidelink message transmitted by the relay UE, the source remote UE, or the transmitting remote UE may include at least one or a combination of information in Table 3.

**[Table 3]**

| |
|---|
| The case of layer-3 UE-to-UE relay: |
| End-to-end QoS information, PC5 QoS information, end-to-end radio bearer identification information, SDAP layer configuration parameter, PDCP layer configuration parameter, RLC layer configuration parameter, MAC layer configuration parameter, and PHY layer configuration parameter |
| The case of layer-2 UE-to-UE relay: |
| End-to-end QoS information, PC5 QoS information (per hop PC5 QoS information), end-to-end radio bearer identification information, RLC layer configuration parameter, MAC layer configuration parameter, PHY layer configuration parameter, and adaptation (ADAPT) layer configuration parameter |

FIG. 11A is a signal flow diagram illustrating an operation of a relay UE that processes sidelink radio bearer configuration information corresponding to a QoS of a remote UE in a UE-to-UE relay according to an embodiment of the disclosure.

With reference to FIG. 11A, in step 1101, a remote UE 1100 may acquire QoS information to be applied to data transmission and reception with other remote UEs. The QoS information may correspond to end-to-end QoS information corresponding to data services between the remote UE 1100 and other remote UEs. The QoS information acquired in step 1101 may include at least one or a combination of PQI information or PC5 QoS profile information. In order to transmit the QoS information acquired in step 1101 to a relay UE 1110, the remote UE 1100 may transmit a PC5 assistance information message to the relay UE 1110 in step 1103. In the case that the PC5 assistance information message is not used, a direct connection request message may be used.

The relay UE 1110 may determine per hop PC5 QoS information mapped to the end-to-end QoS information acquired in step 1103 and acquire sidelink radio bearer configuration information corresponding to the per hop PC5 QoS information in step 1105. The per hop PC5 QoS information may include at least one or a combination of a PQI value or a QoS profile. The PC5 QoS information provided by the relay UE 1110 to the remote UE 1100 may be per-hop PC5 QoS information, and this may be applied to the embodiments of FIGS. 11B and 11C. The relay UE 1110 may acquire sidelink radio bearer configuration information corresponding to per hop PC5 QoS information through an SIB message or an RRC reconfiguration message transmitting from the base station to the relay UE 1100 or through a pre-configuration. As an embodiment, sidelink radio bearer configuration information corresponding to the per hop PC5 QoS information acquired by the relay UE 1100 in step 1105 may include a transmission (TX) parameter and a reception (RX) parameter. As another embodiment, sidelink radio bearer configuration information corresponding to the per hop PC5 QoS information acquired by the relay UE 1110 in step 1105 may include a transmission (TX) parameter, and the relay UE 1110 may arbitrarily configure a reception (RX) parameter.

In step 1107, the relay UE 1110 may transmit an RRC reconfiguration sidelink message including sidelink radio bearer configuration information corresponding to the per hop PC5 QoS to the remote UE 1100. In step 1109, the remote UE 1100 may transmit an RRC reconfiguration complete sidelink message to the relay UE 1110 in response to the RRC reconfiguration sidelink message received in step 1107.

FIG. 11B is a signal flow diagram illustrating an operation of a relay UE that processes sidelink radio bearer configuration information corresponding to a QoS of a remote UE in a UE-to-UE relay according to another embodiment of the disclosure.

With reference to FIG. 11B, in step 1121, a source remote UE 1120 may acquire QoS information to be applied to data transmission and reception with a target remote UE 1150. The QoS information may correspond to end-to-end QoS information corresponding to a data service between the source remote UE 1120 and the target remote UE 1150. The QoS information acquired in step 1121 may include at least one or a combination of PQI information or PC5 QoS profile information. In order to transmit the QoS information acquired in step 1121 to a relay UE 1140, the source remote UE 1120 may transmit a PC5 assistance information message to the relay UE 1140 in step 1123. In the case that the PC5 assistance information message is not used, a direct connection request message may be used.

The relay UE 1140 may determine per hop PC5 QoS information mapped to the end-to-end QoS information acquired in step 1123, and acquire sidelink radio bearer configuration information corresponding to the per hop PC5 QoS information in step 1125. The per hop PC5 QoS information may include at least one or a combination of a PQI value or a QoS profile. The relay UE 1140 may acquire sidelink radio bearer configuration information corresponding to per hop PC5 QoS information through an SIB message or an RRC reconfiguration message transmitting from the base station to the relay UE 1140 or through a pre-configuration. As an embodiment, sidelink radio bearer configuration information corresponding to the per hop PC5 QoS information acquired by the relay UE 1140 in step 1125 may include a transmission (TX) parameter and a reception (RX) parameter. As another embodiment, sidelink radio bearer configuration information corresponding to the per hop PC5 QoS information acquired by the relay UE 1140 in step 1125 may include a transmission (TX) parameter, and the relay UE 1140 may arbitrarily configure a reception (RX) parameter.

In step 1127, the relay UE 1140 may transmit an RRC reconfiguration sidelink message including sidelink radio bearer configuration information corresponding to the per hop PC5 QoS to the source remote UE 1120. In step 1129, the source remote UE 1120 may transmit an RRC reconfiguration complete sidelink message to the relay UE 1140 in response to the RRC reconfiguration sidelink message received in step 1127.

In order to transmit sidelink radio bearer configuration information corresponding to the per hop PC5 QoS acquired in step 1127 to the target remote UE 1150, the source remote UE 1120 may transmit an RRC reconfiguration sidelink message to the target remote UE 1150 in step 1131. In step 1133, the target remote UE 1150 may transmit an RRC reconfiguration complete sidelink message to the source remote UE 1120 in response to the RRC reconfiguration sidelink message received in step 1131. The PC5 RRC message in steps 1131 to 1133 may be transmitted and received directly between the source remote UE 1120 and the target remote UE 1150 or may be transmitted and received through relay transmission of the relay UE 1140.

FIG. 11C is a signal flow diagram illustrating an operation of a relay UE that processes sidelink radio bearer configuration information corresponding to a QoS of a remote UE in a UE-to-UE relay according to another embodiment of the disclosure.

With reference to FIG. 11C, in step 1161, a source remote UE 1160 may acquire QoS information to be applied to data transmission and reception with a target remote UE 1190. The QoS information may correspond to end-to-end QoS information corresponding to a data service between the source remote UE 1160 and the target remote UE 1190. The QoS information acquired in step 1161 may include at least one or a combination of PQI information or PC5 QoS profile information. In order to transmit the QoS information acquired in step 1161 to a relay UE 1180, the source remote UE 1160 may transmit a PC5 assistance information message to the relay UE 1180 in step 1163. In the case that the PC5 assistance information message is not used, a direct connection request message may be used.

The relay UE 1180 may determine per hop PC5 QoS information mapped to the end-to-end QoS information acquired in step 1163, and acquire sidelink radio bearer configuration information corresponding to the per hop PC5 QoS information in step 1165. The per hop PC5 QoS information may include at least one or a combination of a PQI value or a QoS profile. The relay UE 1180 may acquire sidelink radio bearer configuration information corresponding to per hop PC5 QoS information through an SIB message or an RRC reconfiguration message transmitting from the base station to the relay UE 1180 or through a pre-configuration. As an embodiment, sidelink radio bearer configuration information corresponding to the per hop PC5 QoS information acquired by the relay UE 1180 in step 1165 may include a transmission (TX) parameter and a reception (RX) parameter. As another embodiment, sidelink radio bearer configuration information corresponding to the per hop PC5 QoS information acquired by the relay UE 1180 in step 1165 may include a transmission (TX) parameter, and the relay UE 1180 may arbitrarily configure a reception (RX) parameter.

In step 1167, the relay UE 1180 may transmit an RRC reconfiguration sidelink message including sidelink radio bearer configuration information corresponding to the per hop PC5 QoS to the source remote UE 1160. In step 1169, the source remote UE 1160 may transmit an RRC reconfiguration complete sidelink message to the relay UE 1180 in response to the RRC reconfiguration sidelink message received in step 1167.

The PC5 assistance information message in which the source remote UE 1160 transmits to the relay UE 1180 in step 1163 may include information on the target remote UE 1190 in addition to QoS information. In the case that the PC5 assistance information message is not used, a direct connection request message may be used. If it is determined that the PC5 assistance information message includes information on the target remote UE 1190, the relay UE 1180 may transmit sidelink radio bearer configuration information corresponding to the per hop PC5 QoS acquired in step 1165 to the target remote UE 1190. In step 1171, the relay UE 1180 may transmit an RRC reconfiguration sidelink message including sidelink radio bearer configuration information corresponding to the per hop PC5 QoS to the target remote UE 1190. In step 1173, the target remote UE 1190 may transmit an RRC reconfiguration complete sidelink message to the relay UE 1180 in response to the RRC reconfiguration sidelink message received in step 1171. The RRC reconfiguration sidelink message transmitted in step 1171 may include information on the source remote UE 1160.

In FIGS. 11A to 11C, an embodiment in which the relay UE acquires sidelink radio bearer configuration information corresponding to the per hop PC5 QoS of the remote UE and transmits the sidelink radio bearer configuration information to the remote UE may be limited to be performed only in the case that the remote UE does not configure an RRC connection with the base station (e.g., one of an RRC_IDLE state, RRC _INACTIVE state, or out-of-coverage state) or in the case that the remote UE is in an out-of-coverage state (in the case that the remote UE is not under the control of the base station). As an embodiment, in the case that the remote UE does not configure an RRC connection with the base station or is in an out-of-coverage state, and in the case that the remote UE requests that the relay UE configures sidelink radio bearer configuration information corresponding to the per hop PC5 QoS, the remote UE may transmit a PC5 assistance information message to the relay UE. In the case that the PC5 assistance information message is not used, a direct connection request message may be used. The PC5 assistance information message transmitting from the remote UE to the relay UE may include at least one or a combination of QoS information (PQI value or PC5 QoS profile) or target remote UE identification information. As another embodiment, in the case that the remote UE does not configure an RRC connection with the base station or is in an out-of-coverage state, and in the case that the remote UE requests that the relay UE configures sidelink radio bearer configuration information corresponding to the PC5 QoS, the remote UE may transmit information indicating a request for sidelink radio bearer configuration information corresponding to the per hop PC5 QoS through a PC5 assistance information message transmitting to the relay UE. The PC5 assistance information message transmitting from the remote UE to the relay UE may include at least one or a combination of information on whether to request sidelink radio bearer configuration information to the relay UE, QoS information (PQI value or PC5 QoS profile), or target remote UE identification information.

FIG. 12 is a signal flow diagram illustrating an operation of a transmitting remote UE that processes sidelink radio bearer configuration information corresponding to a QoS of the remote UE in an UE-to-UE relay according to an embodiment of the disclosure.

With reference to FIG. 12, in step 1201, a source remote UE 1200 may acquire QoS information to be applied to data transmission and reception with a target remote UE 1240. The QoS information may correspond to end-to-end QoS information corresponding to a data service between the source remote UE 1200 and the target remote UE 1240. The QoS information acquired in step 1201 may include at least one or a combination of PQI information or PC5 QoS profile information. In order to transmit the QoS information acquired in step 1201 to a relay UE 1230, the source remote UE 1200 may transmit a PC5 assistance information message to the relay UE 1230 in step 1203. In the case that the PC5 assistance information message is not used, a direct connection request message may be used.

The relay UE 1230 may determine whether the end-to-end QoS information acquired in step 1203 may be used as per hop PC5 QoS information and transmit the per hop PC5 QoS information to the source remote UE 1200 in step 1205. The PC5 QoS information transmitted in step 1205 may include at least one or a combination of information on whether the QoS information transmitted by the source remote UE 1200 in step 1203 may be used as PC5 QoS information, and per hop PC5 QoS information (at least one or a combination of a PQI value or a QoS profile) to be used by the source remote UE 1200.

In step 1207, the source remote UE 1200 may acquire sidelink radio bearer configuration information corresponding to the per-hop PC5 QoS information identified in step 1205. The source remote UE 1200 may acquire sidelink radio bearer configuration information corresponding to the per hop PC5 QoS information through an SIB message or an RRC reconfiguration message transmitting from the base station to the source remote UE 1200 or through a pre-configuration. As an embodiment, sidelink radio bearer configuration information corresponding to the per hop PC5 QoS information acquired by the source remote UE 1200 in step 1207 may include a transmission (TX) parameter and a reception (RX) parameter. As another embodiment, sidelink radio bearer configuration information corresponding to the per hop PC5 QoS information acquired by the source remote UE 1200 in step 1207 may include a transmission (TX) parameter, and the source remote UE 1200 may arbitrarily configure a reception (RX) parameter.

In step 1209, the source remote UE 1200 may transmit an RRC reconfiguration sidelink message including sidelink radio bearer configuration information corresponding to the PC5 QoS to the target remote UE 1240. In step 1211, the target remote UE 1240 may transmit an RRC reconfiguration complete sidelink message to the source remote UE 1200 in response to the RRC reconfiguration sidelink message received in step 1209. The PC5 RRC messages in steps 1209 and 1211 may be transmitted and received directly between the source remote UE 1200 and the target remote UE 1240, or may be transmitted and received through relay transmission of the relay UE 1230.

FIG. 13 is a signal flow diagram illustrating an operation of a remote UE that processes sidelink radio bearer configuration information corresponding to a QoS of the remote UE in an UE-to-UE relay according to an embodiment of the disclosure.

With reference to FIG. 13, a remote UE 1, 1300 corresponding to the TX UE and a remote UE 2, 1340 corresponding to a TX UE may acquire QoS information to be applied to data transmission and reception with the remote UE 2, 1340 corresponding to an RX UE and the remote UE 1, 1300 corresponding to the RX UE in steps 1301 and/or 1309, respectively. The QoS information may correspond to end-to-end QoS information corresponding to a data service between the remote UE 1, 1300 and the remote UE 2, 1340 or end-to-end QoS information corresponding to a data service between the remote UE 2, 1340 and the remote UE 1, 1300. The QoS information acquired in steps 1301 and/or 1309 may include at least one or a combination of PQI information or PC5 QoS profile information.

In order to transmit the QoS information acquired in step 1301 to a relay UE 1330, the remote UE 1, 1300 may transmit a PC5 assistance information message to the relay UE 1330 in step 1303. In the case that the PC5 assistance information message is not used, a direct connection request message may be used. In order to transmit the QoS information acquired in step 1309 to the relay UE 1330, the remote UE 2, 1340 may transmit a PC5 assistance information message to the relay UE 1330 in step 1311. The relay UE 1330 may determine whether the end-to-end QoS information acquired in steps 1303 and/or 1311 may be used as per hop PC5 QoS information, transmit per hop PC5 QoS information to the remote UE 1, 1300 in step 1305, and transmit per hop PC5 QoS information to the remote UE 2, 1340 in step 1313.

The PC5 QoS information transmitted in step 1305 may include at least one or a combination of information on whether the QoS information transmitted by the remote UE 1, 1300 in step 1303 may be used as PC5 QoS information, and per hop PC5 QoS information (at least one or a combination of a PQI value or a QoS profile) to be used by the remote UE 1, 1300. The PC5 QoS information transmitted in step 1313 may include at least one or a combination of information on whether the QoS information transmitted by the remote UE 2, 1340 in step 1311 may be used as PC5 QoS information, and per hop PC5 QoS information (at least one or a combination of a PQI value or a QoS profile) to be used by the remote UE 2, 1340.

In step 1307, the remote UE 1, 1300 may acquire sidelink radio bearer configuration information corresponding to the per hop PC5 QoS information identified in step 1305. The remote UE 1, 1300 may acquire sidelink radio bearer configuration information corresponding to per hop PC5 QoS information through an SIB message or an RRC reconfiguration message transmitting from the base station to the remote UE 1, 1300 or through a pre-configuration. As an embodiment, sidelink radio bearer configuration information corresponding to the per hop PC5 QoS information acquired by the remote UE 1, 1300 in step 1307 may include a transmission (TX) parameter and a reception (RX) parameter. As another embodiment, sidelink radio bearer configuration information corresponding to the per hop PC5 QoS information acquired by the remote UE 1, 1300 in step 1307 may include a transmission (TX) parameter, and the remote UE 1, 1300 may arbitrarily configure a reception (RX) parameter.

In step 1315, the remote UE 2, 1340 may acquire sidelink radio bearer configuration information corresponding to the per hop PC5 QoS information identified in step 1313. The remote UE 2, 1340 may acquire sidelink radio bearer configuration information corresponding to per hop PC5 QoS information through an SIB message or an RRC reconfiguration message transmitting from the base station to the remote UE 2, 1340 or through a pre-configuration. As an embodiment, sidelink radio bearer configuration information corresponding to the per hop PC5 QoS information acquired by the remote UE 2, 1340 in step 1315 may include a transmission (TX) parameter and a reception (RX) parameter. As another embodiment, sidelink radio bearer configuration information corresponding to the per hop PC5 QoS information acquired by the remote UE 2, 1340 in step 1315 may include a transmission (TX) parameter, and the remote UE 2, 1340 may arbitrarily configure a reception (RX) parameter.

In step 1317, the remote UE 1, 1300 may transmit an RRC reconfiguration sidelink message including sidelink radio bearer configuration information corresponding to the PC5 QoS to the remote UE 2, 1340 corresponding to the target UE. In step 1319, the remote UE 2, 1340 may transmit an RRC reconfiguration complete sidelink message to the remote UE 1, 1300 corresponding to the source UE in response to the RRC reconfiguration sidelink message received in step 1317. The PC5 RRC messages in steps 1317 and 1319 may be transmitted and received directly between the remote UE 1, 1300 and the remote UE 2, 1340 or may be transmitted and received through relay transmission of the relay UE 1330.

In step 1321, the remote UE 2, 1340 may transmit an RRC reconfiguration sidelink message including sidelink radio bearer configuration information corresponding to the PC5 QoS to the remote UE 1, 1300 corresponding to the target UE. In step 1323, the remote UE 1, 1300 may transmit an RRC reconfiguration complete sidelink message to the remote UE 2, 1340 corresponding to the source UE in response to the RRC reconfiguration sidelink message received in step 1321. The PC5 RRC messages in steps 1321 and 1323 may be transmitted and received directly between the remote UE 1, 1300 and the remote UE 2, 1340 or may be transmitted and received through relay transmission of the relay UE 1330.

Methods according to the embodiments described in the claims or specifications of the disclosure may be implemented in the form of hardware, software, or a combination of hardware and software.

In the case of being implemented in software, a computer readable storage medium storing one or more programs (software modules) may be provided. One or more programs stored in the computer readable storage medium are configured for execution by one or more processors in an electronic device. The one or more programs include instructions for causing an electronic device to execute methods according to embodiments described in the claims or specifications of the disclosure.

Such programs (software modules, software) may be stored in a random access memory, a non-volatile memory including a flash memory, a read only memory (ROM), an electrically erasable programmable ROM (EEPROM), a magnetic disc storage device, a compact disc-ROM (CD-ROM), digital versatile discs (DVDs), another form of optical storage device, or a magnetic cassette. Alternatively, the programs may be stored in a memory composed of a combination of some or all thereof. Further, each constitution memory may be included in the plural.

Further, the program may be stored in an attachable storage device that may access through a communication network such as the Internet, Intranet, local area network (LAN), wide LAN (WLAN), or storage area Network (SAN), or a communication network composed of a combination thereof. Such a storage device may access a device implementing an embodiment of the disclosure through an external port. Further, a separate storage device on the communication network may access the device implementing the embodiment of the disclosure.

In the specific embodiments of the disclosure described above, components included in the disclosure were expressed in the singular or plural according to the presented specific embodiments. However, the singular or plural expression is appropriately selected for a situation presented for convenience of description, and the disclosure is not limited to the singular or plural components, and even if a component is represented in the plural, it may be composed of the singular, or even if a component is represented in the singular, it may be composed of the plural.

In the detailed description of the disclosure, although specific embodiments have been described, various modifications are possible without departing from the scope of the disclosure. Therefore, the scope of the disclosure should not be limited to the described embodiments and should be defined by the claims described below as well as by those equivalent to the claims.

## Claims

1. A method performed by a relay terminal in a wireless communication system, the method comprising:
receiving, from a first terminal, an assistance message including first quality of service (QoS) information for a data service between the first terminal and a second terminal;
acquiring second QoS information related to the relay terminal and the first terminal based on the first QoS information;
transmitting the second QoS information to the first terminal;
acquiring first sidelink radio bearer configuration information based on the second QoS information;
transmitting, to the first terminal, a radio resource control (RRC) reconfiguration sidelink message including the first sidelink radio bearer configuration information; and
receiving an RRC reconfiguration complete sidelink message from the first terminal.

2. The method of claim 1, further comprising:
acquiring third QoS information related to the relay terminal and the second terminal based on the first QoS information;
transmitting the third QoS information to the second terminal;
acquiring second sidelink radio bearer configuration information based on the third QoS information;
transmitting, to the second terminal, an RRC reconfiguration sidelink message including the second sidelink radio bearer configuration information; and
receiving an RRC reconfiguration complete sidelink message from the second terminal.

3. The method of claim 2,
wherein the first QoS information corresponds to end-to-end QoS information for a data service between the first terminal and the second terminal,
wherein the second QoS information corresponds to per hop PC5 QoS information related to the relay terminal and the first terminal,
wherein the third QoS information corresponds to per hop PC5 QoS information related to the relay terminal and the second terminal, and
wherein the second QoS and the third QoS are configured to have a PC5 5QI (PQI), QoS profile, or packet delay budget (PDB) value corresponding to the end-to-end QoS.

4. The method of claim 1,
wherein the assistance message further comprises an identifier of the first terminal, an identifier of the second terminal, RRC state information of the first terminal, and an indicator requesting a sidelink radio bearer configuration information, and
wherein the first sidelink radio bearer configuration information is acquired based on an RRC reconfiguration message or a system information block (SIB) received from the base station.

5. A method performed by a first terminal in a wireless communication system, the method comprising:
acquiring first quality of service (QoS) information for a data service between the first terminal and a second terminal;
transmitting, to a relay terminal, an assistance message including the first QoS information;
receiving, from the relay terminal, second QoS information acquired based on the first QoS information;
acquiring second sidelink radio bearer configuration information based on the second QoS information;
receiving, from the relay terminal, a radio resource control (RRC) reconfiguration sidelink message including first sidelink radio bearer configuration information acquired based on the second QoS information; and
transmitting an RRC reconfiguration complete sidelink message to the relay terminal.

6. The method of claim 5,
wherein the first sidelink radio bearer configuration information is applied in the case that the first terminal is a receiving terminal, and the second sidelink radio bearer configuration information is applied in the case that the first terminal is a transmitting terminal.

7. The method of claim 5,
wherein the first QoS information corresponds to end-to-end QoS information for a data service between the first terminal and the second terminal,
wherein the second QoS information corresponds to per hop PC5 QoS information related to the relay terminal and the first terminal,
wherein third QoS information corresponding to per hop PC5 QoS information related to the relay terminal and the second terminal is acquired from the first QoS, and
wherein the second QoS and the third QoS are configured to have a PC5 5QI (PQI), QoS profile, or packet delay budget (PDB) value corresponding to the end-to-end QoS.

8. The method of claim 5,
wherein the assistance message further comprises an identifier of the first terminal, an identifier of the second terminal, RRC state information of the first terminal, and an indicator requesting a sidelink radio bearer configuration information, and
wherein the second sidelink radio bearer configuration information is acquired based on an RRC reconfiguration message or a system information block (SIB) received from the base station.

9. A relay terminal of a wireless communication system, the relay terminal comprising:
a transceiver; and
a controller,
wherein the controller is configured to control to:
receive, from a first terminal, an assistance message including first quality of service (QoS) information for a data service between the first terminal and a second terminal,
acquire second QoS information related to the relay terminal and the first terminal based on the first QoS information,
transmit the second QoS information to the first terminal,
acquire first sidelink radio bearer configuration information based on the second QoS information,
transmit, to the first terminal, a radio resource control (RRC) reconfiguration sidelink message including the first sidelink radio bearer configuration information, and
receive an RRC reconfiguration complete sidelink message from the first terminal.

10. The relay terminal of claim 9,
wherein the controller is configured to control to:
acquire third QoS information related to the relay terminal and the second terminal based on the first QoS information,
transmit the third QoS information to the second terminal,
acquire second sidelink radio bearer configuration information based on the third QoS information,
transmit, to the second terminal, an RRC reconfiguration sidelink message including the second sidelink radio bearer configuration information, and
receive an RRC reconfiguration complete sidelink message from the second terminal.

11. The relay terminal of claim 10,
wherein the first QoS information corresponds to end-to-end QoS information for a data service between the first terminal and the second terminal,
wherein the second QoS information corresponds to per hop PC5 QoS information related to the relay terminal and the first terminal,
wherein the third QoS information corresponds to per hop PC5 QoS information related to the relay terminal and the second terminal, and
wherein the second QoS and the third QoS are configured to have a PC5 5QI (PQI), QoS profile, or packet delay budget (PDB) value corresponding to the end-to-end QoS.

12. The relay terminal of claim 9,
wherein the assistance message further comprises an identifier of the first terminal, an identifier of the second terminal, RRC state information of the first terminal, and an indicator requesting a sidelink radio bearer configuration information, and
wherein the first sidelink radio bearer configuration information is acquired based on an RRC reconfiguration message or a system information block (SIB) received from the base station.

13. A first terminal of a wireless communication system, the first terminal comprising:
a transceiver; and
a controller,
wherein the controller is configured to control to:
acquire first quality of service (QoS) information for a data service between the first terminal and a second terminal,
transmit, to the relay terminal, an assistance message including the first QoS information,
receive, from the relay terminal, second QoS information acquired based on the first QoS information,
acquire second sidelink radio bearer configuration information based on the second QoS information,
receive, from the relay terminal, a radio resource control (RRC) reconfiguration sidelink message including first sidelink radio bearer configuration information acquired based on the second QoS information, and
transmit an RRC reconfiguration complete sidelink message to the relay terminal.

14. The first terminal of claim 13,
wherein the first sidelink radio bearer configuration information is applied in the case that the first terminal is a receiving terminal, and the second sidelink radio bearer configuration information is applied in the case that the first terminal is a transmitting terminal.

15. The method of claim 13,
wherein the first QoS information is configured to correspond to end-to-end QoS information for a data service between the first terminal and the second terminal,
wherein the second QoS information corresponds to per hop PC5 QoS information related to the relay terminal and the first terminal,
wherein third QoS information corresponding to per hop PC5 QoS information related to the relay terminal and the second terminal is acquired from the first QoS, and
wherein the second QoS and the third QoS are configured to have a PC5 5QI (PQI), QoS profile, or packet delay budget (PDB) value corresponding to the end-to-end QoS.
